**Europäisches Patentamt**

**European Patent Office**

**Office européen des brevets**

(19)

(11) **EP 0 936 517 B1**

(12) # EUROPEAN PATENT SPECIFICATION

(45) Date of publication and mention
of the grant of the patent:
**05.03.2003 Bulletin 2003/10**

(51) Int Cl.⁷: **G05D 1/00**, G05D 1/02,
G01S 5/14, G01C 21/16

(21) Application number: **99106271.2**

(22) Date of filing: **10.12.1990**

(54) **Integrated vehicle positioning and navigation system, apparatus and method**

Integriertes Fahrzeugpositionier- und -navigationssystem, dessen Vorrichtung und Verfahren

Procédé, appareil et système de navigation et de positionnement intégrés pour véhicules

(84) Designated Contracting States:
**DE FR GB SE**

(30) Priority: **11.12.1989 WOPCT/US89/05580**

(43) Date of publication of application:
**18.08.1999 Bulletin 1999/33**

(62) Document number(s) of the earlier application(s) in
accordance with Art. 76 EPC:
**95110798.6 / 0 679 974**
**91902277.2 / 0 507 845**

(73) Proprietor: **CATERPILLAR INC.**
**Peoria Illinois 61629-6490 (US)**

(72) Inventors:
 • **Kyrtsos Christos T.**
  **Peoria, Illinois 61615 (US)**
 • **Gudat, Adam J.**
  **Edelstein, Illinois 61516 (US)**
 • **Christensen, Dana A.**
  **Snarestone, Derby, DE12 7DB (GB)**
 • **Friedrich, Douglas W.**
  **Pekin, Illinois 61554 (US)**
 • **Stafford, Darrell E.**
  **Grants Pass, Oregon 97527 (US)**
 • **Sennott, James W.**
  **Bloomington, Illinois 61701 (US)**
 • **Bradbury, Walter J.**
  **Dunlap, Illinois 61525 (US)**
 • **Clow, Richard G.**
  **Phoenix, Arizona 85027 (US)**
 • **Devier, Lonnie J.**
  **Tarumi KU 665 0872, Kobe (JP)**
 • **Kemner, Carl A.**
  **Peoria Heights, Illinois 61614 (US)**

 • **Kleimenhagen, Karl W.**
  **Peoria, Illinois 61614 (US)**
 • **Koehrsen, Craig L.**
  **Queensland 4035 (AU)**
 • **Lay, Norman K.**
  **Peoria, Illinois 61615 (US)**
 • **Peterson, Joel L.**
  **East Peoria, Illinois 61611 5418 (US)**
 • **Rao, Prithvi N.**
  **Pittsburgh, Pennsylvania 15206 (US)**
 • **Schmidt, Larry E.**
  **Chillicothe, Illinois 61523 (US)**
 • **Shaffer, Garry K.**
  **Butler, Pennsylvania 16001 (US)**
 • **Shi, WenFan**
  **Pittsburgh, Pennsylvania 15213 (US)**
 • **Shin, Dong Hun**
  **Guro-gu, Guro 1, Don S, Seoul (KR)**
 • **Singh, Sanjiv J.**
  **Pittsburgh, Pennsylvania 15217 (US)**
 • **Weinbeck, Louis J.**
  **Livingston, Texas 77399-1036 (US)**
 • **West, Jay H.**
  **Junction City, Kansas 66441 (US)**
 • **Whittaker, William L.**
  **Pittsburgh, Pennsylvania 15207 (US)**
 • **Wu, BaoXin (NMI)**
  **Pittsburgh, Pennsylvania 15213 (US)**

(74) Representative: **Haley, Stephen**
  **Gill Jennings & Every,**
  **Broadgate House,**
  **7 Eldon Street**
  **London EC2M 7LH (GB)**

(56) References cited:
  **WO-A-87/07056**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 0 936 517 B1**

- **S. BOSE: "GPS/PLRS aided inertial land navigation system performance" IEEE PLANS '86 POSITION LOCATION AND NAVIGATION SYMPOSIUM, 4-7 NOVEMBER 1986, LAS VEGAS, US, pages 496-504, XP002106349**
- **L. SCHUCHMAN ET AL.: "Applicability of an Augmented GPS for Navigation in the International' Airspace System" PROCEEDINGS OF THE IEEE, pages 1709-1727, XP000101185 NEW YORK, US**
- **PATENT ABSTRACTS OF JAPAN vol. 13, no. 306 (P-897), 13 July 1989 & JP 01 079679 A (TOYOTA), 24 March 1989**

**Description**

Background of the Invention

1. Field of the Invention

The present invention relates to positioning systems, and more particularly, to a positioning system and method for determining the terrestrial position of an autonomous vehicle on or near the planet Earth's surface.

2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S.R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Using more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates of vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUs can make strap-down IRUs attractive for both military and commercial applications.

The performance of navigation systems using IRUs is primarily limited by errors contributed by the various constituent sensors within the IRUs. Gyroscopes drift. accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

EP-A-0181012 discloses a vehicle position estimating system combining GPS and inertial navigation systems. IEEE Position Location and Navigation system with GPS comparison.

DE-A-3310111 discloses a navigation system with drift compensation. US-A-3630079 discloses a navigation system utilizing multiple sensors and error correction.

GPS/PLRS aided inertial land navigation system performance by S. Bose, from the IEEE PLANS 86 POSITION LOCATION AND NAVIGATION SYMPOSIUM, 4-7 NOVEMBER 1986, LAS VEGAS, US, pages 496-504, discloses a computer based system for autonomously navigating a vehicle along a predetermined path.

According to the present invention, there is provided a computer-based system for autonomously navigating a vehicle along a predetermined path, the system comprising:

first means for determining a location of the vehicle, the first means including:

a first positioning system adapted to provide a first position estimate of the vehicle based on first signals from a terrestrial position determinating system;
a second positioning system adapted to provide a second position estimate of the vehicle based on second signals obtained from an inertial reference unit mounted on the vehicle and a vehicle odometer; and
a processing system adapted to compute a third position estimate of the vehicle from the first position estimate and the second position estimate; and
second means for causing the vehicle to track the predetermined path; characterised in that the system further comprises:

third means for causing the vehicle to detect and avoid obstacles while tracking the predetermined path; and that
the processing system comprises a weighted combiner, which is employed in the computation of the third position estimate of the vehicle.

The present invention also provides a computer-based method for autonomously navigating a vehicle along a predetermined path, the method comprising the steps of:

determining a location of the vehicle using a terrestrial position determining system, an inertial reference unit, and a vehicle odometer;
causing the vehicle to track the predetermined path based upon the location; and
causing the vehicle to detect and avoid obstacles while tracking the predetermined path characterised in that:

the location is determined by producing, with a weighted combiner, a location based upon a position estimate from the terrestrial position determining system and a position estimate from the inertial reference unit.

The present invention can be used to aid any navigation system for autonomous vehicles. The autonomous vehicles can be stationary or moving. Moreover, the autonomous vehicles can be at or near the Earth's surface. In other words, the present invention provides for highly accurate and fast tracking of any terrestrial vehicle. It provides both apparatuses and methods, which allow for a superior positioning capability and, consequently, a flexible autonomous navigational capability.

Further features and advantages of the present invention will become apparent to one of skill in the art upon examination of the following drawings and detailed description. It is intended that any additional features and advantages be incorporated therein.

The present invention as defined in the claims can be better understood with reference to the text and to the following drawings.

Figure 1 illustrates a block diagram of the preferred embodiment of the present invention;

Figure 1A is a block diagram 100A of the operational GPS satellites in the NAVSTAR GPS;

Figure 2 illustrates four, simultaneous, navigation equations regarding four GPS satellites of the NAVSTAR GPS;

Figure 3 is a block diagram of a typical autonomous work site;

Figure 4 is a block diagram of the interrelationships between a navigator, a vehicle VPS architecture, and vehicle controls of the present invention;

Figure 5 is a block diagram illustrating elements in an autonomous control system;

Figure 6 is a block diagram of the operation of a GPS;

Figure 7 is a block diagram of a GPS processing system of the preferred embodiment;

Figure 8 is a flow diagram of the GPS processing system of Figure 7;

Figure 9 is a block diagram of an MPS, including an odometer 902 and an inertial reference unit (IRU) 904;

Figure 10 is a block diagram of the VPS;

Figure 11 is a block diagram of the VPS architecture of Figure 10;

Figure 12 is a block diagram of a VPS main (I/O) processor of Figure 10;

Figure 12A is a block diagram of a super Kalman filter of the preferred embodiment;

Figure 13 is a flowchart of the constellation effects method;

Figure 14 is a polar plot on a coordinate system 1402 illustrating a set of computed estimated pseudoranges;

Figure 15 is a flowchart of an original bias technique;

Figure 16 is a flowchart of a parabolic bias technique;

Figure 17 is a flowchart of a base residuals bias technique;

Figure 17A is a flowchart of a base correlator bias technique;

Figure 18 is a flowchart of a method for the prediction of future satellite positions;

Figure 19 is a flowchart of a weighted path history technique;

Figure 20 is a graphical representation 2000 of first position estimates of the vehicle 102 using the weighted path history method of Figure 19;

Figure 20A illustrates a flowchart of the weighted path history technique of Figures 19 and 20;

Figure 21 is a diagram of vehicle route definitions;

Figure 22 is a context diagram of a path tracking structure;

Figure 23A is an illustration of a vehicle mounted scanner 404;

Figure 23B is an illustration of an autonomous vehicle scanning for an obstacle;

Figure 24 is a diagram of an autonomous vehicle avoiding obstacles;

I. <u>Definitions</u>

**(1)** "Absolute position" in the context of this document refers to a position relative to the center of the Earth. Generally, an absolute position will be in reference to a vehicle or the base station, both on or near the Earth's surface. First, second, and third position estimates are all absolute positions in the preferred embodiment of the present invention.

**(2)** "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or $2.9979245898 * 10^8$ m/s.

**(3)** "Anti-selective availability" refers to a method/technique/process for detecting and compensating for corrupted GPS data in the coarse/acquisition (C/A) mode of modulation.

**(4)** "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.

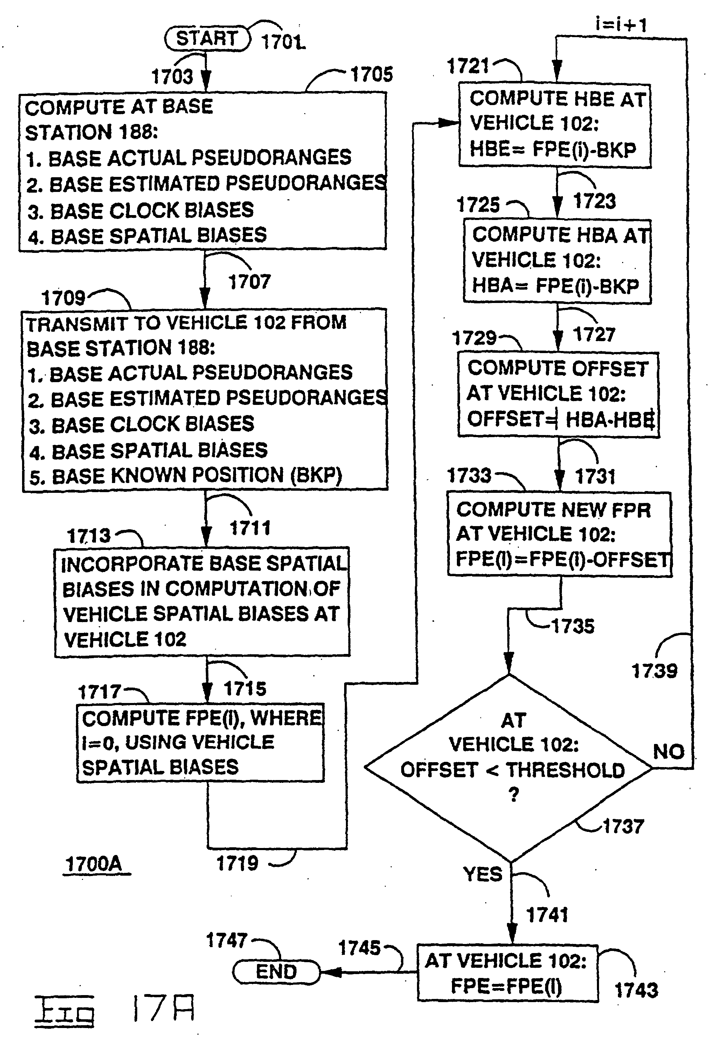

**(5)** "Base correlator bias" means a spatial bias derived in accord with the flowchart 1700A of Figure 17A.

**(6)** "Base correlator bias technique" means a method/process for computing base correlator biases.

**(7)** "Base estimated position" or "BEP" refers to the relative position of the base station with respect to a vehicle. The BEP is used in the base correlator bias.

**(8)** "Base known position" or "BKP" is the absolute position of the base station (used as a reference point) which is known. The BKP can be an estimate itself, derived from any accurate positioning system. The BKP is assumed to be a more accurate estimate of the base station's absolute position than any other position estimate.

**(9)** "Base position estimate" means the absolute position estimate of the base station as derived from the GPS processing system within the host processing system. The base position estimate is substantially similar to the first position estimate derived by the GPS processing system at the vehicle. The base position estimate is computed in the base residuals bias technique

**(10)** "Base residuals bias" means a spatial bias which is the effective difference in the base known position (BKP) of the base station and the position estimate of the base station which is computed by the host processing system.

**(11)** "Base residuals bias technique" refers to a method for deriving base residuals biases.

**(12)** "Bias" refers to a differential between two measurements, usually position estimates (spatial bias) or clock rates (clock bias). Because one measurement is usually known to be more accurate than another, the bias is often times referred to as an "error."

**(13)** "Clock bias" means the difference in the clock times between (1) the transmission circuitry of GPS satellites and/or pseudolites and (2) the reception circuitry of an Earth receiver. When using a clock bias in the computation of a spatial bias, the clock bias is multiplied by the speed of light, or $2.998 * 10^8$ meters per second. Consequently, the clock bias is transformed into units of length.

**(14)** "Constellation" refers to a group comprised of GPS satellites and/or pseudolites whose signals are utilized to derive an absolute position estimate of a point on or near the Earth's surface. See "optimal constellation" below.

**(15)** "Constellation effects method" means a technique or process by which an optimal constellation of GPS satellites is selected from a larger group of GPS satellites in view of a vehicle.

**(16)** "Data radio" refers to a transmitter, receiver, transceiver, or any combination thereof, for communicating data at radio frequencies (RF).

**(17)** "Earth receiver" refers to any apparatus or device, or any part thereof, which receives and processes signals from a GPS and/or pseudolites. Earth receivers may be situated on or near the Earth's surface. Moreover, earth receivers may take the form of, for example, a vehicle or a base station.

**(18)** "Estimated pseudorange" refers to an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Estimated pseudoranges are computed from GPS data encoded on the electromagnetic signals being transmitted from the GPS satellites and/or the pseudolites. Almanac equations for computing estimated pseudoranges from the GPS data of the NAVSTAR GPS are publicly available.

**(19)** "First position estimate" or "FPE" or "FPE(i)" refers to an estimated absolute position of any vehicle which is outputted, in any form, from the GPS. The first position estimate and a second position estimate are independently derived in the present invention. Subsequently, these estimates are combined and filtered to derive a third position estimate. Consequently, the accuracy of the first position estimate affects the accuracy of the third position estimate.

**(20)** "GLONASS GPS" refers to the GPS which has been designed and which is currently being deployed by the U.S.S.R.

**(21)** "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR." The government of the U.S.S.R. has designated its GPS the "GLONASS."

**(22)** "GPS data" means all data encoded on signals transmitted from GPS satellites of a GPS. GPS data includes, for example, ephemeris data and time data.

**(23)** "GPS processing system" refers to the system of the present invention for receiving signals from a terrestrial position determination system and for deriving first position estimates of vehicles from the received signals. In the preferred embodiment, the GPS processing system receives electromagnetic signals from GPS satellites of a GPS and/or from pseudolites.

**(24)** "Host processing system" refers to a computer system which is operating at the base station for performing methods and techniques which increase the accuracy of position estimates of vehicles. Data derived from these methods and techniques is transmitted to vehicles so that the vehicles can use the data when computing first, second, and third position estimates. In the preferred embodiment, the architecture/hardware of the host processing system is substantially similar to the architecture/hardware of the VPS.

**(25)** "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. In the preferred embodiment, the IRU is part of the MPS.

**(26)** "Kalman filter" is used in its conventional sense. It refers to a software program for filtering out noise or errors in data. In the preferred embodiment, a GPS Kalman filter is utilized to filter out noise or errors in the GPS processing system in order to enhance the accuracy of first position estimates. Also, a VPS Kalman filter is utilized to filter out noise in the VPS in order to enhance the accuracy of second position estimates.

**(27)** "Motion positioning system" or "MPS" means a system comprising at least an IRU and a vehicle odometer. In the preferred embodiment, the MPS derives the second position estimate of any vehicle on or near the Earth's surface. Moreover, an MPS need not be present at the base station due to its stationary nature.

**(28)** "Optimal constellation" means a satellite constellation in which the relative positions of the GPS satellites in space affords superior triangulation capabilities in order to derive the most accurate estimate of a point on or near the Earth's surface.

**(29)** "Original bias" means a spatial bias calculated by subtracting both estimated pseudoranges and clock biases (in units of length) from actual pseudoranges. Clock biases are transformed into units of length by multiplying them by the speed of light, or $2.9979245898 * 10^8$ meters per second.

**(30)** "Original bias technique" is a method for computing original biases.

**(31)** "NAVSTAR GPS" means the GPS which has been designed and which is currently being deployed by the U. S. government.

**(32)** "Navigation system" refers to any systems and/or methods for guiding any vehicle on or near the Earth's surface. The navigation system can be on-board a vehicle. The VPS of the present invention can supply the navigation system of the vehicle with a very accurate, third position estimate of the vehicle so that the navigation system can thereby precisely guide the vehicle.

**(33)** "Parabolic bias" is a spatial bias computed by constructing parabolic models for the actual pseudoranges of each observed GPS satellite and extrapolating values from the parabolic models. In the preferred embodiment, the parabolic biases are the actual pseudoranges minus the value extrapolated from the constructed parabolic models and minus the clock biases (in units of length, via multiplying by the speed of light).

**(34)** "Parabolic bias technique" is a method for computing parabolic biases for each of the GPS satellites that are utilized.

**(35)** "Preferred embodiment" refers to the best mode of implementing the present invention. The preferred embodiment is merely exemplary. The present invention should not be interpreted as being limited by the preferred embodiment.

**(36)** "Pseudolite" refers to a radiating system on or near the Earth's surface for emulating a GPS satellite. In the preferred embodiment, electromagnetic signals, similar to those from GPS satellites, are transmitted from land-based pseudolites. One or more pseudolites can be used to emulate GPS satellites to enhance the computation of first position estimates.

**(37)** "Pseudolite data" means all data encoded on signals received from pseudolites. Pseudolite data resembles GPS data in many respects and includes similar information.

**(38)** "Pseudorange" means the distance between a source of a terrestrial position determination system and a point on or near the Earth's surface. In the preferred embodiment, sources can be GPS satellites and/or pseudolites. The terrestrial position determination system can be a GPS used with pseudolites, if any. Further, the point on or near the Earth's surface can be the base station and/or vehicles.

**(39)** "Satellite position predictor" is a method for determining the future positions of GPS satellites. The method allows for the selection of optimal constellations ahead of time.

**(40)** "Second position estimate" or "SPE" refers to an estimated absolute position of any vehicle which is outputted, in any form, from the MPS. Second position estimates include at least position information from an IRU. The second position estimate could include position information from a vehicle odometer situated on a vehicle.

**(41)** "Spatial bias" refers to a bias related to approximations of positions in two-dimensional or three-dimensional space. Spatial biases are used to offset a position estimate to enhance the accuracy of the position estimate. Spatial biases can be computed by a number of different methods of the present invention. Included in these methods are, for example, an original bias

| | |
|---|---|
| technique 1500 | a parabolic bias |
| technique 1600 | a base residuals bias |
| technique 1700 | and a base correlator |
| bias technique 1700A. | |

**(42)** "System" is used for shorthand purposes to mean apparatus, method, or a combination of both apparatus and method. Moreover, it could include software, hardware, or a combination of hardware and software.

**(43)** "Position determination system" means any system having sources which emanate signals which can be used by a receiver of the signals to estimate the relative distance between the sources and the receiver. The signals may be in the form of, for example, electromagnetic waves, percussion waves, and/or sound waves.

**(44)** "Terrestrial position determination system" means any position determination system which can be used to ultimately estimate the terrestrial position of an Earth receiver. The signals may be in the form of, for example, electromagnetic waves, percussion waves, and/or sound waves. In the preferred embodiment, the terrestrial position determination system is the NAVSTAR GPS.

**(45)** "Third position estimate" or "TPE" refers an estimated absolute position of any vehicle that is outputted, in any form, from the VPS. Third position estimates are more accurate position estimates of vehicle positions than the first and second position estimates. Third position are derived by the VPS processing system from the first and second position estimates.

**(46)** "Vehicle" means any carrier for the transportation of physical things. Vehicles may take the form of mining trucks, construction trucks, farm tractors, automobiles, ships, boats, trains, balloons, missiles, or aircraft. A Caterpillar Inc. 785 off-highway truck may be utilized.

**(47)** "Vehicle positioning system" or "VPS" refers to the system of the present invention for deriving position estimates of any vehicle. The position estimates from the VPS are extremely accurate and can be used by a navigation system on any vehicle to accurately guide the vehicle. In the preferred embodiment, position estimates from the VPS are referred to as third position estimates.

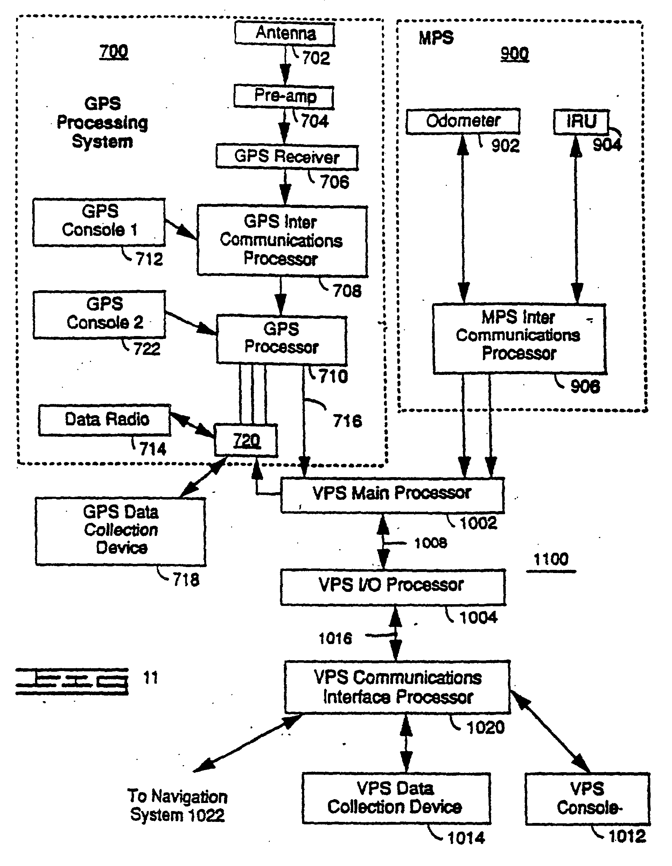

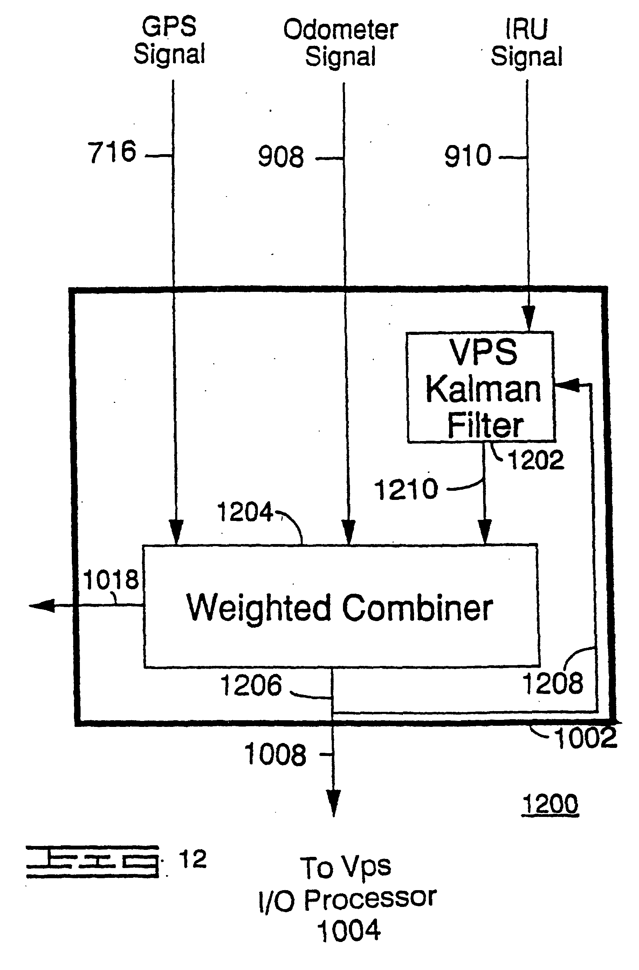

**(48)** "VPS processing system" means the processing system of the VPS. The VPS processing system derives third position estimates from the first and second position estimates. The architecture is depicted in Figures 10 and 11.

**(49)** "Weighted combiner" refers to a particular software program which processes data. Inputted data is assigned a predetermined weighing factor based on the estimated accuracy of the data and the technique used to gather the data. For example, in the preferred embodiment, the first position estimate of the GPS signal 716 is weighted heavier than the second position estimate of the IRU signal 910 because the former is inherently more accurate. Furthermore, the velocity measured by the IRU can be weighted heavier than the velocity measured by the GPS processing system because the former is more accurate. In the preferred embodiment, the velocity measured by the GPS processing system is not used at all, but could be used in other implementations.

**(50)** "Weighted path history technique" is a method or process for increasing the accuracy of first position estimates outputted from the GPS processing system. The technique uses previous first position estimates to derive a vehicle path model for testing the validity of future first position estimates. Use of the weighted path history technique results in a reduction to wandering of first position estimates and in enhanced immunities to spurious position computations.

II. General Overview

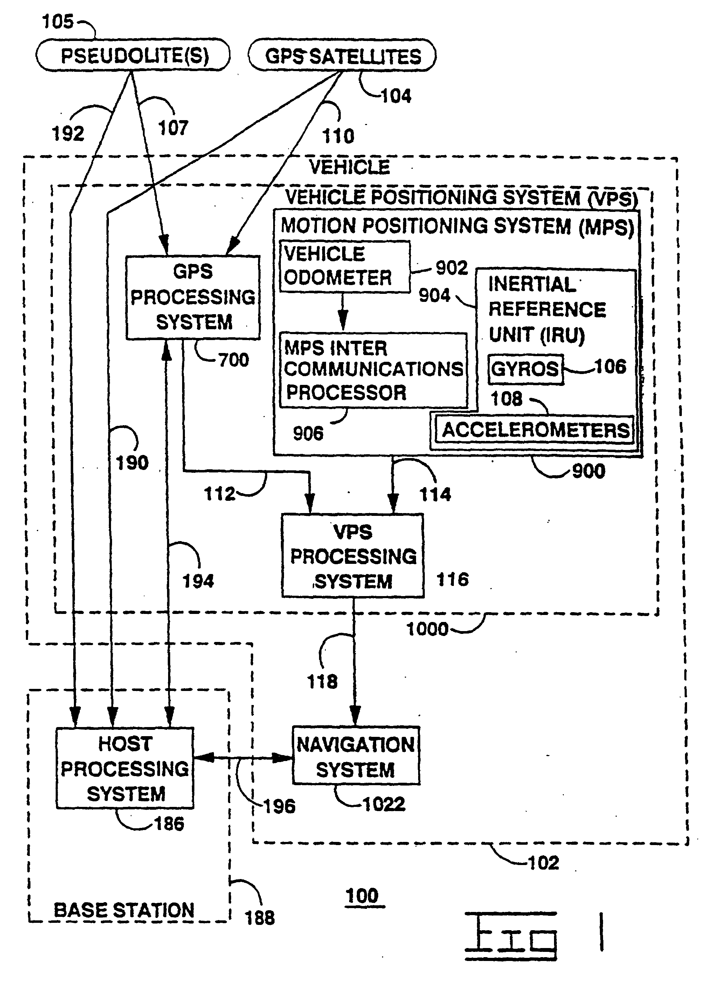

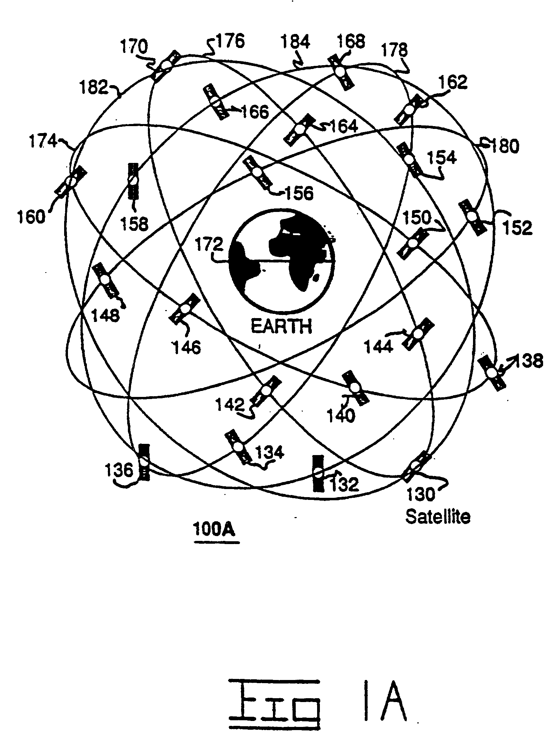

Figure 1 illustrates a high level block diagram 100 of the preferred embodiment of the present invention. To provide for the accurate autonomous operation of a vehicle 102 on or near the Earth's surface, the present invention includes both a vehicle positioning system (VPS) 1000 and a navigation system 1022. Both of these systems include apparatus, methods, and techniques which, when integrated together, provide for highly accurate control of unmanned vehicles.

A. Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.
Using the VPS 1000 of the present invention, position estimates of the vehicle 102 can be determined with extreme preciseness. The VPS 1000 receives GPS data from GPS satellites 104 of a GPS, such as the NAVSTAR GPS or the GLONASS GPS.
Figure 1A illustrates the NAVSTAR GPS. GPS satellites 130-168 travel around the Earth 172 in six orbits 174-184.
Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods of the present invention to enhance the accuracy of vehicle position estimates.

More specifically, the VPS 1000 of the preferred embodiment is a positioning system based on the incorporation of GPS data from the NAVSTAR GPS 104 and from a motion positioning system 900. In the preferred embodiment, the motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To increase the accuracy of the first position estimate the present invention implements a number of methods discussed in detail below. In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

B. <u>Navigation System</u>

The navigation system 1022 receives the third position estimate from the VPS 1000. The navigation system 1022 uses the precise, third position estimate to accurately navigate the vehicle 102. A primary purpose or the navigation system 1022 is to guide the vehicle 102 between points along pre-established or dynamically-generated paths.

The navigation system 1022 may be situated on the vehicle 102 itself. In other words, it is essentially an "on-board" system. Moreover, the navigation system 1022 may be designed to be retrofitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and architecture of the navigation system 1022 has been designed for real time tracking of vehicle paths at speeds of up to approximately 30 miles per hour (mph).

C. <u>Base Station</u>

The example system may comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 discussed above is also implemented by the host processing system 186. The host processing system 186 will recognize the same satellite constellation that is observed by the vehicle 102.

Calculations are performed on the GPS data and/or pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias

| technique 1500 | a parabolic bias |
| technique 1600 | a base residuals bias |
| technique 1700 | and a base correlator |
| bias technique 1700A | |

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022.

The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets of nodes and segments along the named vehicle route.

II Vehicle Positioning System

A. Overview

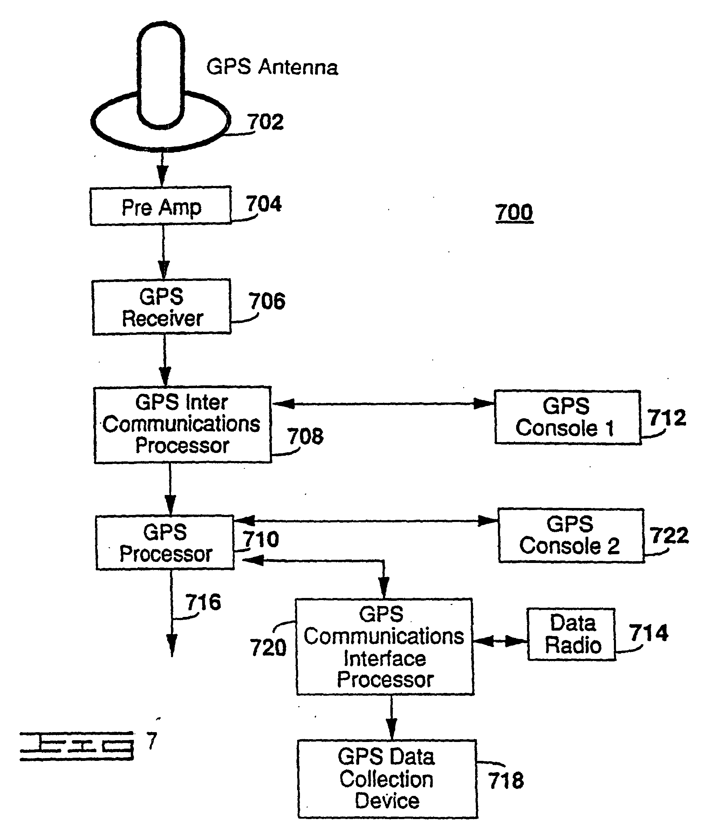

The following discussion relative to the VPS 1000 will make specific reference to Figures 7 through 21. Figures 10 and 11 show the architecture/hardware of the VPS 1000. The VPS 1000 is a highly accurate position determination system for a moving or stationary vehicle 102 on or near the Earth's surface.

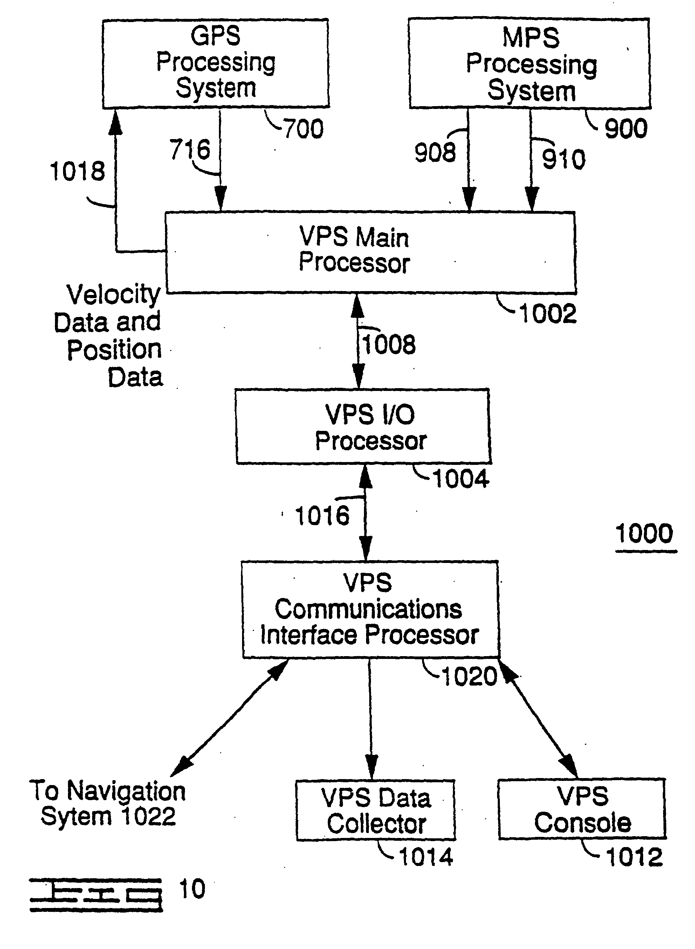

Recall that the VPS 1000 includes the GPS processing system 700 and the MPS 900, which are shown in respective Figures 7 and 9. Further recall that the MPS 900 includes the IRU 904 and the vehicle odometer 902, which are both shown in Figure 9. In effect, these systems have been enhanced and integrated by the present invention to produce a highly effective position determining system.

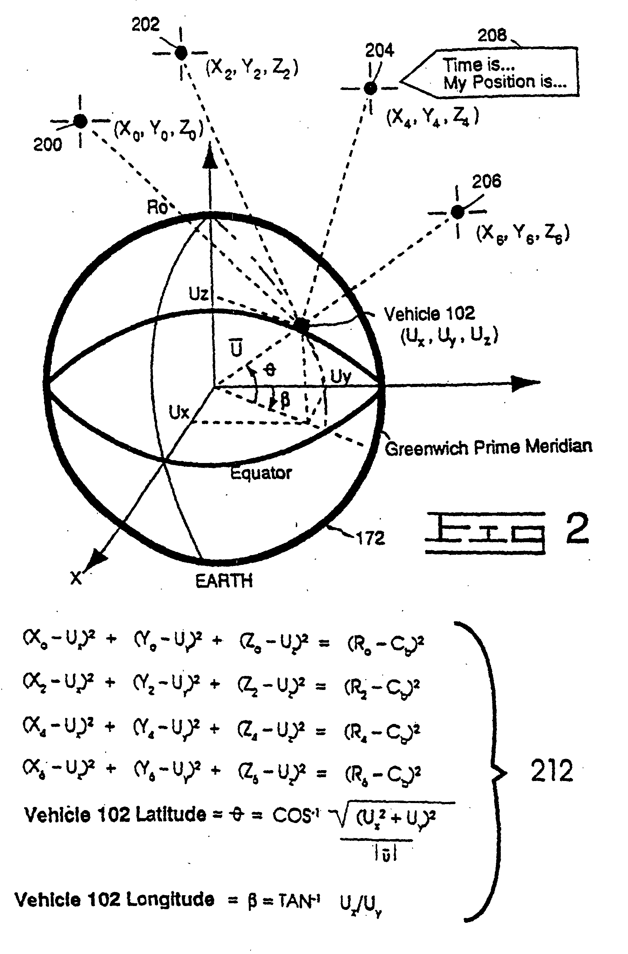

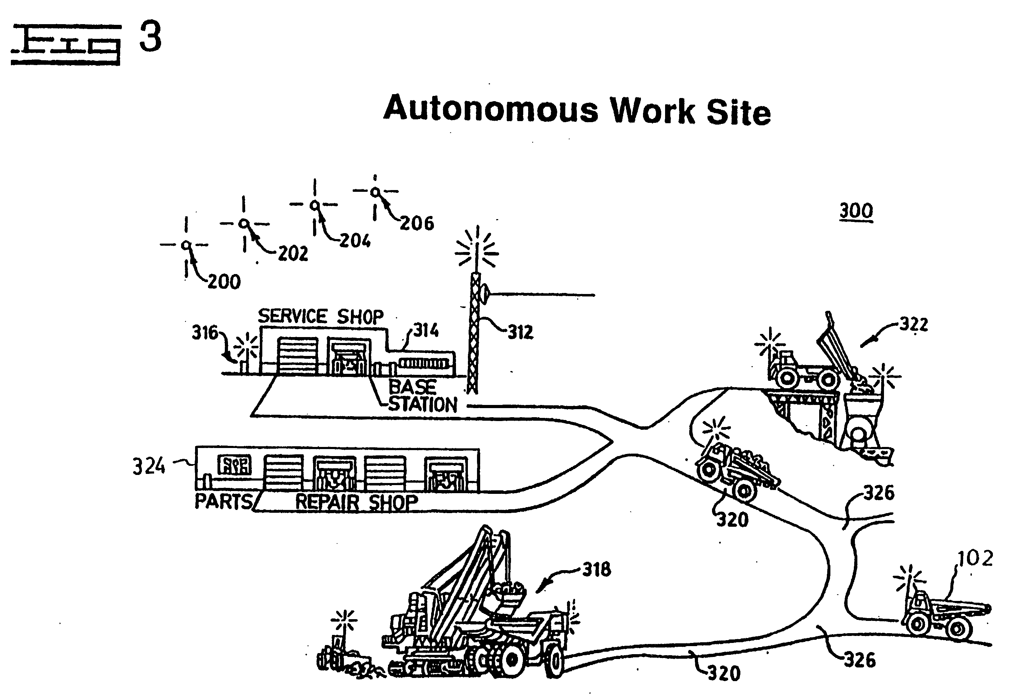

Referring to Figure 7, the GPS processing system 700 includes an antenna 702 connected to a GPS receiver 706 When the GPS satellites 104 in view of antenna 702 comprise multiple GPS satellites 200-206 as shown in Figures 2 and 3, the GPS receiver 706 reads each of their GPS data along with any pseudolite data from any pseudolite(s) 105 in view of antenna 702. In the preferred embodiment, the GPS receiver 706 is responsible for computing the first position estimate of the vehicle 102 from the GPS data and/or the pseudolite data.

To increase the accuracy of the first position method, a satellite position predictor method 1800 is implemented by a GPS processor 710 of the GPS processing system 700. The satellite position predictor method 1800 predicts the position of any GPS satellite at the current time or any future time.

Using the satellite position information, the GPS processing system 700 can determine the optimum GPS satellite constellation to recognize by using a constellation effects method 1300. The constellation effects method 1300 may also be implemented by the GPS processor 710.

Pursuant to the constellation effects method 1300, a best constellation is selected from the data sources comprising the GPS satellites 200-206 and pseudolite(s) 105.

The GPS processor 706 computes a first position estimate of the vehicle 102 based on the best constellation and geometry/triangulation methods. The accuracy of the first position estimate is, in part, dependent on the number of GPS satellites used in the computation. Each additional GPS satellite used can increase the accuracy of the first position estimate. After the computation, the first position estimate of the vehicle 102 is transmitted to a VPS main processor 1002 of Figure 10.

Referring to Figure 9, the IRU 904 comprises laser gyroscopes and accelerometers which produce position, velocity, roll, pitch, and yaw data. The IRU 904 combines this information into a second position estimate of the vehicle 102. The odometer 902 can be implemented to measure the distance travelled by the vehicle 102. The data from the IRU 904 and the odometer 902 is also transmitted via the MPS intercommunications processor 906 to the VPS main processor 1002, as shown in Figure 10.

The VPS main processor 1002 combines the second position estimate from the MPS 900 (the IRU 904 and perhaps the odometer 902) with the first position estimate from the GPS processing system 700 to produce a more accurate third position estimate.

The VPS 1000 further implements a method of eliminating erratic or spurious, third position estimates which can cause vehicle "wandering." This method is called the weighted path history method. Essentially, the path history of the vehicle 102 is used to statistically determine the accuracy of future estimates of the vehicle 102's position.

Referring now to Figures 1 and 3, a base station 188 provides a geographic proximate reference point for the VPS 1000. The base station 188 includes a host processing system 186. The host processing system 186 comprises similar a similar architecture and performs the same functions as the GPS processing system 700. However, the host processing system 700 performs additional functions for increasing the accuracy of first position estimates.

The satellite position predictor method 1800 is implemented by the host processing system 186, in addition to the GPS processing system 700 as discussed above. Accordingly, the host processing system 186 *will* recognize the same GPS satellite constellation that is observed by the vehicle 102 or include the same GPS satellite in a larger constellation.

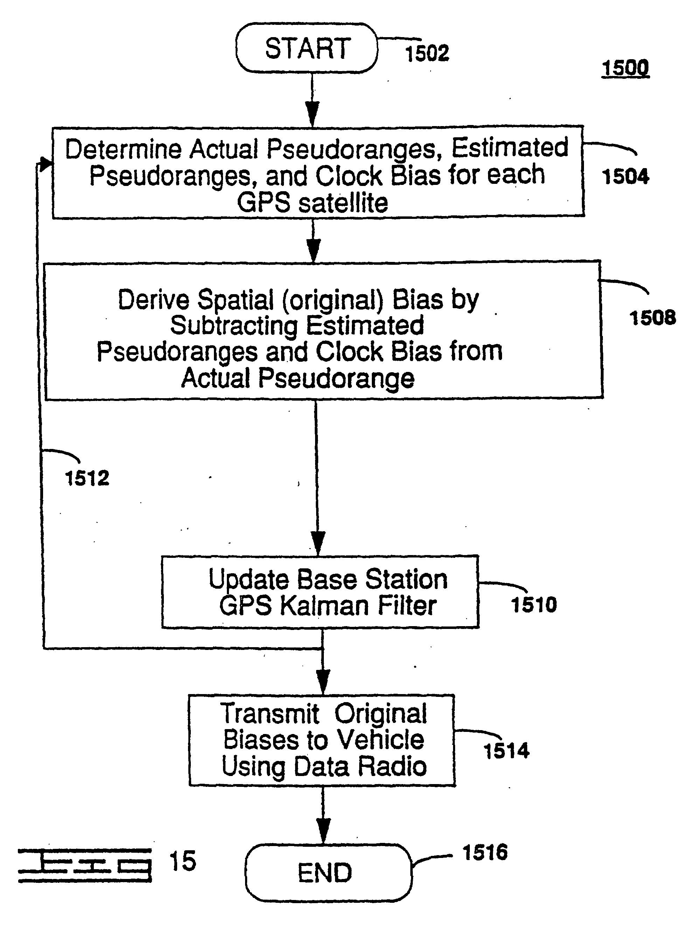

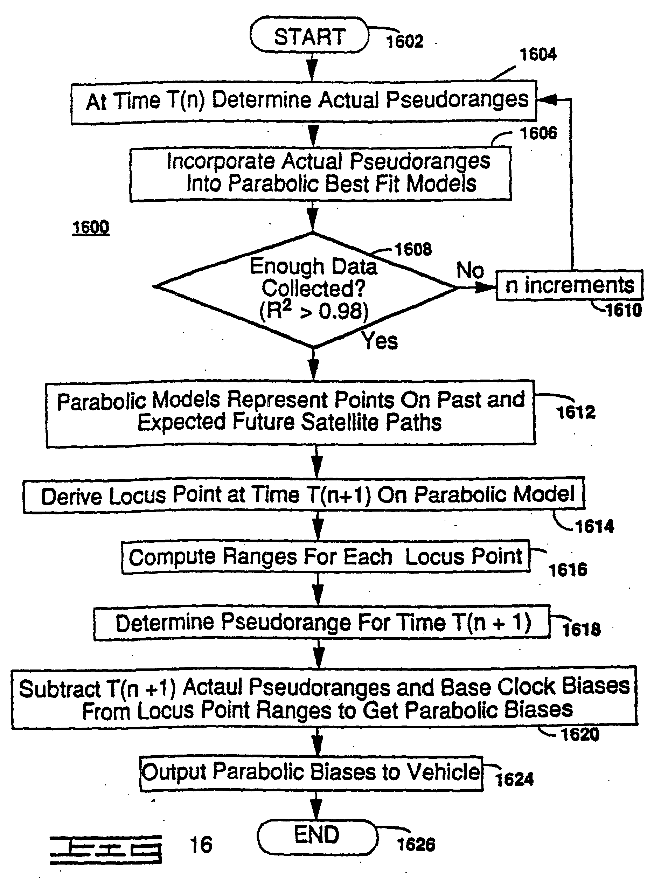

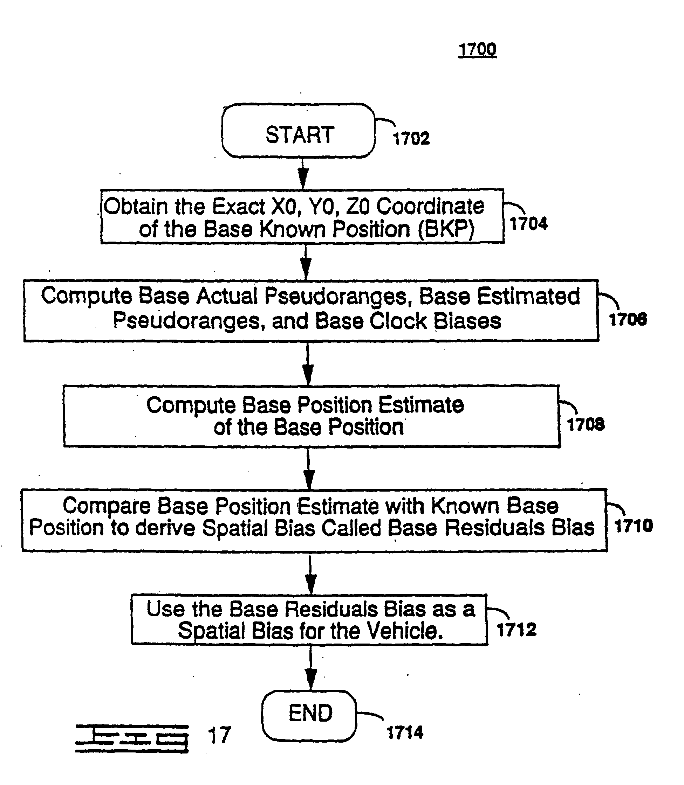

Calculations are performed on the GPS data and/or pseudolite data to derive biases, including spatial biases and clock biases. To compute spatial biases, the host processing system 186 implements a number of methods. Figure 15 discloses an original bias technique 1500. Figure 16 discloses a parabolic bias technique 1600. Figure 17 discloses a base residuals bias technique 1700. Figure 17A discloses a base correlator bias technique 1700A.

As shown by an arrow 194, the spatial and clock biases are transmitted to the GPS processing system 700 of the vehicle 102. The GPS processing system 700 uses these biases to eliminate errors in vehicle position estimates.

B. GPS Processing System

The GPS processing system 700 utilizes vehicle position data from a terrestrial position determination system to derive the first position estimate of the vehicle 102. The terrestrial position determination system may comprise the NAVSTAR GPS, which is currently being developed by the U.S. government, and/or Earth- based pseudolites.

1. NAVSTAR GPS

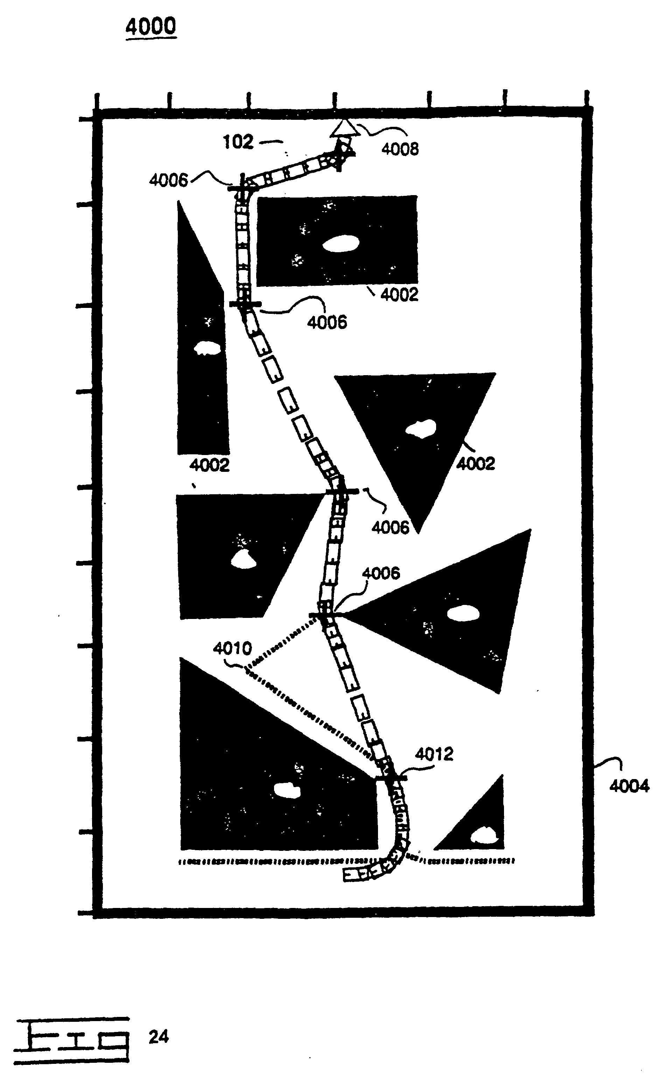

As shown in Figure 1A, 24 man-made electronic GPS satellites 132-170 in six orbits 174-184 are currently envisioned for the NAVSTAR GPS. They are planned for deployment by 1993. As currently envisioned, the GPS satellites 132-170 will orbit the Earth 172 at an altitude of approximately 14,000 miles and encircle the globe twice a day. Using the C mode of the NAVSTAR GPS, as will be discussed below, it will be possible to determine terrestrial positions within 15 meters in any weather, any time, and most areas of the Earth 172.

As of the date of the filing of this document, there are known to be six experimental and seven operational GPS satellites in orbit around the Earth 172. Further, several manufacturers are known to be designing and building GPS receivers, such as the GPS receiver 706 of Figure 7. As more and more GPS satellites are deployed and operational, the time periods increase when three or more of the experimental GPS satellites are available each day for position tracking.

Moreover, the location of the experimental GPS satellites (and all others once deployed) is very predictable. The relative position, or "pseudorange," of these GPS satellites with respect to the GPS receiver 706 on the vehicle 102 can be determined from the electromagnetic signals by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting GPS satellites. Almanac data relating to the GPS satellite position data of the NAVSTAR GPS is publicly available. Reference to this almanac data in regard to data encoded in the electromagnetic signals allows for an accurate derivation of pseudoranges if the receiver location is known. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Reference is again made to Figure 1A of the drawings wherein the configuration of the fully- operational NAVSTAR GPS is schematically illustrated. Each of the 24 GPS satellites 132-170 transmits electromagnetic signals which can be used to determine the absolute terrestrial position (that is, longitude, latitude, and altitude with respect to the Earth 172's center) of the vehicle 102.

Specifically, by knowing the relative position of at least three of the orbiting GPS satellites 132-170, the absolute terrestrial position of the vehicle 102 can be computed via simple geometric theory involving triangulation methods. The accuracy of the terrestrial position estimate depends in part on the number of orbiting GPS satellites 132-170 that are sampled by the vehicle 102. The sampling of more GPS satellites 132-170 in the computation increases the accuracy of the terrestrial position estimate. Conventionally, four GPS satellites, instead of three, are sampled to determine each terrestrial position estimate because of errors contributed by circuit clock differentials among the circuitry of the vehicle 102 and the various GPS satellites 132-170.

In the NAVSTAR GPS, electromagnetic signals are continuously transmitted from all of the GPS satellites 132-170 at a single carrier frequency. However, each of the GPS satellites 132-170 has a different modulation scheme, thereby allowing for differentiation of the electromagnetic signals. In the NAVSTAR GPS, the carrier frequency is modulated using a pseudorandom binary code signal (data bit stream) which is unique to each GPS satellite. The pseudorandom binary code signal is used to biphase modulate the carrier frequency. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of the vehicle 102 to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences that are extremely long, so that the sequences repeat no more than once per 276 days. As a result, the terrestrial position of the vehicle 102 can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals *from* the different GPS satellites.

With reference to Figure 7, the GPS processing system 700 processes the GPS data from the GPS satellites 132-170 and the pseudolite data from any pseudolite(s) 105. Furthermore, the GPS receiver 706 decodes the C/A signals from the various GPS satellites 132-170.

Figure 2 illustrates navigation equations 212 regarding four GPS satellites 200-206 of the NAVSTAR GPS. The four GPS satellites 200, 202, 204, and 206 have respective pseudoranges R0, R2, R4, and R6 and comprise the current constellation of GPS satellites 132-170 recognized by the vehicle 102.

The navigation equations 212 include the clock bias $C_b$ between the GPS satellites 200-206 and the vehicle 102. The navigation equations 212 are used to compute the longitude and latitude of the vehicle 102 using the pseudoranges R0, R2, R4, and R6.

As is shown in the description block 208, each of the GPS satellites 200, 202, 204, and 206 transmits GPS data that includes timing data (GPS time) and ephemeris data. Using the navigation equations 212, which are well-known in the conventional art and the foregoing timing data, the pseudoranges R0, R2, R4, and R6 can be estimated (called actual pseudoranges) by the GPS processing system 700. Furthermore, using the foregoing ephemeris data and almanac data on the Earth 172, the pseudoranges R0, R2, R4, and R6 can be estimated (called estimated pseudoranges) by the GPS processing system.

2. Operation

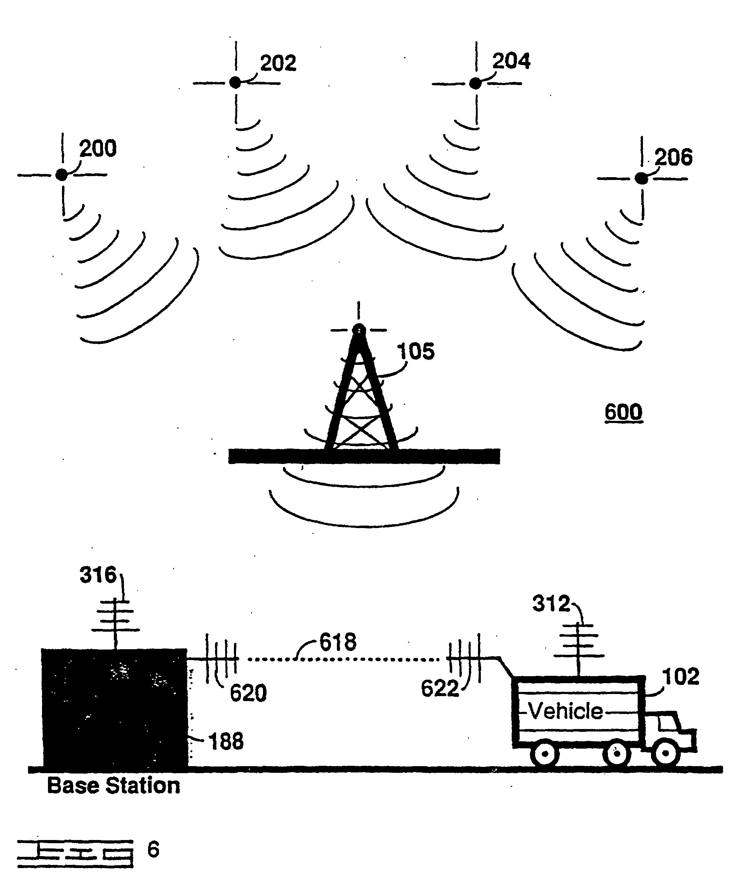

Turning now to Figure 6, a representative GPS constellation is shown in operation. Four GPS satellites 200, 202, 204 and 206 are transmitting GPS data. Both the vehicle 102 and the base station 188 are receiving these signals from each of these GPS satellites 200, 202, 204, and 206 on their respective GPS antennas 312 and 316. In the preferred embodiment, both the C/A code and the carrier frequency are received at GPS antennas 312 and 316 for processing.

In addition to the four GPS satellites shown in the Figure 6 is the pseudolite 105. The pseudolite(s) 105 can be strategically placed around the perimeter of any mine pit and can emulate the GPS satellites 200, 202, 204, and 206 as shown in Figure 6. This arrangement can be extremely useful in situations such as a mine pit, cavity, or the like, in which mining vehicles may be out of view of one or more of the GPS satellites 200, 202, 204, and 206, because of topographic features such as high mine pit walls. The ground-based pseudolite(s) 105 provides additional ranging signals and can thus improve availability and accuracy of the positioning capability in the present invention.

The pseudolite(s) 105 is synchronized with the GPS satellites 200, 202, 204, and 206 and has a signal structure that, while different, is compatible with the GPS satellites 200, 202, 204, and 206. Moreover, the distance (range) between the vehicle 102 and the pseudolite(s) 105 is calculated similarly as the distance between the vehicle 102 and one of GPS satellites 200, 202, 204, and 206. With pseudolite(s) 105, the ranging error does not include selective availability nor ionospheric errors. However, other errors must be accounted for such as tropospheric, pseudolite clock error and multipath errors.

In a deep pit surface mining operation, the view of the sky from a vehicle 102 in the mine can be limited by the walls of the mine. Consequently, an adequate number of GPS satellites may not be in view for the GPS processing system 700 to properly derive a first position estimate. In such a case in the present invention, one or more pseudolites 105 can serve as secondary sources. The pseudolite(s) can be placed on the rim of the mine or elsewhere. The pseudolite(s) 105 can be used by the vehicle 102 in conjunction with any visible GPS satellites to obtain accurate first position estimates.

It is also envisioned that other forms of secondary sources could be implemented to aid GPS satellites or to completely eliminate the need to receive GPS data from the GPS satellites. Moreover, a laser scanning technique may utilized to give localized ranging data to the vehicle 102 from a secondary reference source.

Communication channel 618 represents the communications link between the base station 188 and the vehicle 102. In the preferred embodiment, the communication channel 618 comprises an electromagnetic link established by data-radios 620 and 622 which are transceivers. The communication channel 618 is used to transfer data between the base station 188 and the vehicle 102. It is envisioned that other forms of communication media may be utilized. For example, a laser scanning technique may utilized to convey information from the base station 108 to the vehicle 102.

The data radios 620 and 622 are located at the base station 188 and vehicle 102 respectively. The radios 620 and 622 are responsible for exchanging data between the base station 188 and the vehicle 102. The type of data exchanged will be discussed further below.

A radio transceiver which functions appropriately in the preferred embodiment as the data radios 620 and 622 is commercially available from Dataradio Ltd. of Montreal, Canada, Model Number DR-48OOBZ.

Turning now to Figure 7, the preferred embodiment of a GPS processing system 700 is shown. The GPS processing system 700 on the vehicle 102 includes a GPS antenna 702. In the preferred embodiment, the GPS antenna 702 is receptive to the radio spectrum of electromagnetic radiation. However, the present invention contemplates reception of any signal by which *GPS* satellites 132-170 might encode data. In the preferred embodiment, the GPS antenna 702 is the commercially available antenna having Model No. CA3224 from Chu Associates Inc. of Littleton, Massachusetts.

The GPS antenna 702 is coupled to a preamplifier 704 so that the signals received at the GPS antenna 702 can be transmitted to the preamplifier 704. The term "couple" in the context of this document means any system and method for establishing communication. Coupling systems and methods may include, for example, electronics, optics, and/or sound techniques as well as any others not expressly described herein. In the preferred embodiment, coupling is commonly electronic and adheres to any one of numerous industry standard electronic interfaces.

The preamplifier 704 amplifies and down converts the GPS data received from the GPS antenna 702 so that the GPS data can be processed, or decoded. The present invention contemplates any method by which the received signals can be amplified. In the preferred embodiment, the preamplifier 704 is the commercially available preamplifier having Model No. 5300, Series GPS RF/IF from Stanford Telecommunications Inc. (STel) of Santa Clara, California. The preamplifier 704 is coupled to a GPS receiver 706. The GPS receiver 706 processes the GPS data sent from the GPS satellites 200, 202, 204, and 206 in view of the GPS antenna 702. The GPS receiver 706 computes actual pseudoranges for each of the GPS satellites 200, 202, 204, and 206. Actual pseudoranges are defined in this document as an estimate of the pseudoranges R0, R2, R4, and R6 which is derived from the time delay between the transmission of electromagnetic signals from the GPS satellites and the reception of the electromagnetic signals by the GPS processing system 700. Moreover, in the preferred embodiment, the GPS receiver 706 can process in parallel all of the actual pseudo-ranges for the GPS satellites 200, 202, 204, and 206.

In the preferred embodiment of the present invention, the GPS receiver 706 produces this data when four or more GPS satellites are visible. Using the differential correction techniques the GPS processing system 700 can compute (at GPS processor 710) the first position estimate with an accuracy of approximately 25 meters when an optimal constellation of four GPS satellites 200, 202, 204, and 206 is in view. When an optimal constellation of five GPS satellites (not shown) is in view, the GPS processing system 700 of the preferred embodiment can compute the first position estimate with an accuracy of approximately 15 meters. An "optimal" constellation is one in which the relative positions of the GPS satellites in space affords superior triangulation capability, triangulation technology being well known in the art.

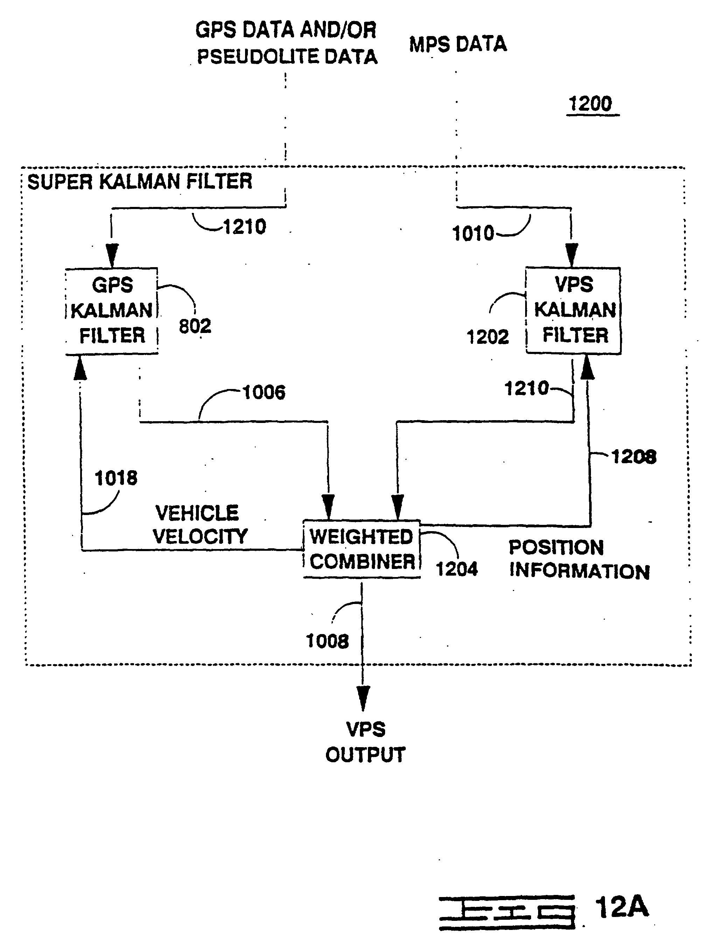

In the preferred embodiment, the GPS receiver 706 outputs actual pseudoranges and the number of GPS satellites 132-170 currently being sampled. In cases in which the number of GPS satellites 132-170 viewed for a series of first position estimates is less than four, the VPS weighted combiner 1204 (see Figure 12 and discussion) in the preferred embodiment does not use the first position estimates received from the GPS processing system 700 (specifically, the GPS processor 710) in the computation of the third position estimate.

In the preferred embodiment, the GPS receiver 706 comprises a Model Number 5305-NSI receiver, which is commercially available from Stanford Telecommunications Inc. However, any receiver which is capable of providing actual pseudoranges and the number of sampled GPS satellites may be utilized.

Because of the type of receiver used in the preferred embodiment, the GPS receiver 706 is coupled to a GPS intercommunication processor 708. In the preferred embodiment, the intercommunication processor 708 is the commercially available 68000 microprocessor from Motorola Inc., of Schaumburg, Illinois, U.S.A. Any processor alone or in combination with the GPS receiver 706 for accomplishing the same purpose as described below may be utilized.

The GPS intercommunication processor 708 is further coupled to a GPS processor 710 and a GPS Console 1 712. The GPS intercommunication processor 708 coordinates data exchange between these three devices. Specifically, the GPS intercommunication processor 708 receives pseudorange data from the GPS receiver 706 which it passes on to the GPS processor 710. The pseudorange data includes, for example, the actual pseudoranges computed by the GPS receiver 706, the number of GPS satellites 200, 202. 204, and 206 currently being viewed by the GPS receiver 706, and other GPS data needed by the GPS processor 710 to compute the estimated pseudoranges for each of the GPS satellites 200, 202, 204, and 206. The GPS intercommunication processor 708 also relays status information regarding the GPS receiver 706 and the GPS processor 710 to the GPS Console 1 712.

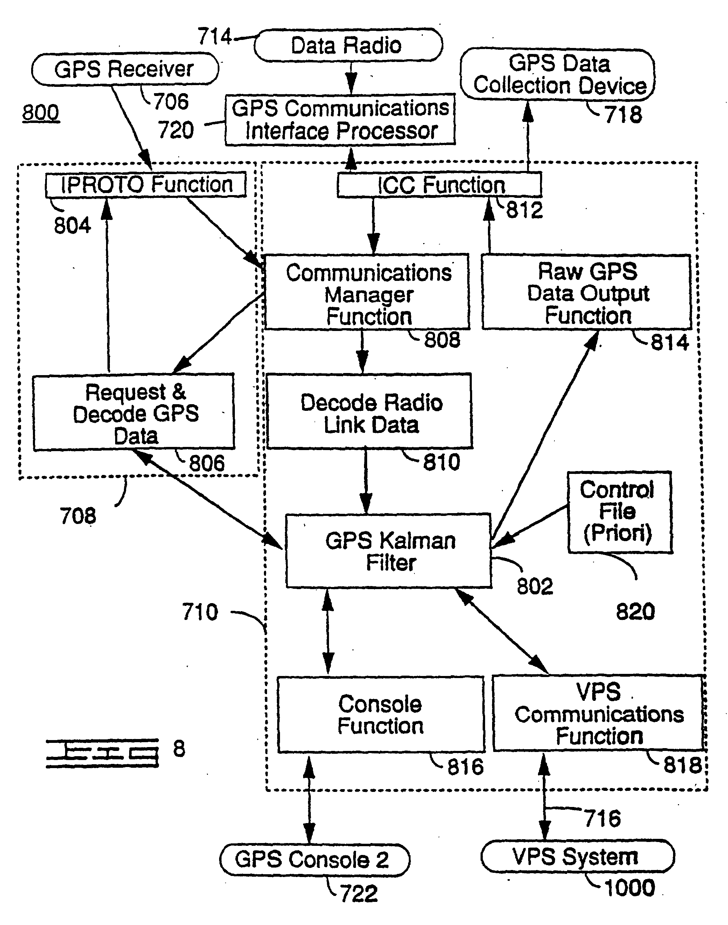

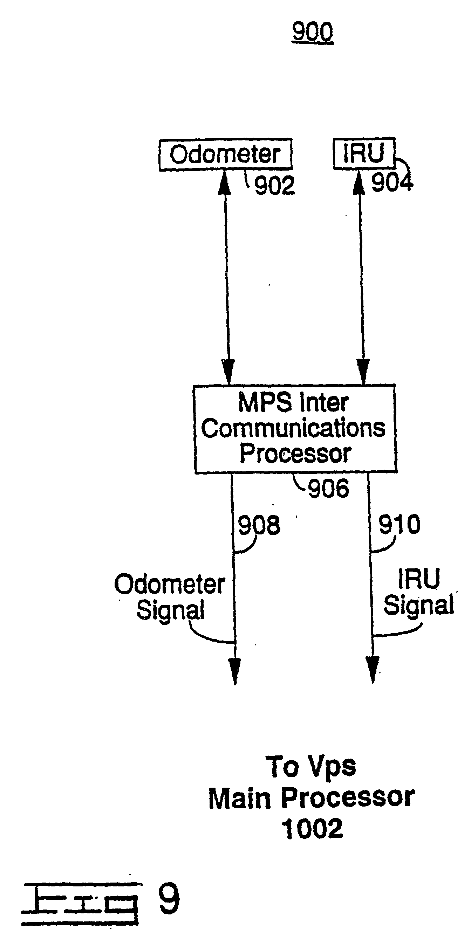

The GPS intercommunication processor 708 transmits the above information to the GPS processor 710. In the preferred embodiment, the GPS processor 710 comprises the 68020 microprocessor, which is commercially available from Motorola Inc. Figure 8 is a low level flow diagram 800 illustrating the functioning of the software in the GPS processor 710.

The GPS processor 710 uses a number of algorithms and methods to process the data it receives including, for example, a GPS Kalman filter 802, which is shown in Figure 8. The Kalman filter 802 is well known in the conventional art. In the preferred embodiment, the GPS Kalman filter 802 is a module in the software of the GPS processor 710.

In part, the function of the Kalman filter 802 is to filter out noise associated with the pseudorange data. The noise may include, for example, ionospheric, clock, and/or receiver noise. The GPS Kalman filter 802 of the host processing system 186 at the base station 188 computes spatial and clock biases which are both transmitted to the vehicle 102 for increasing the accuracy of first position estimates.

In contrast, the GPS Kalman filter 802 in the vehicle 102 takes into consideration the spatial and clock biases which are received from the base station 188.

The GPS Kalman filter 802 functions in a semi-adaptive manner. In other words, the GPS Kalman filter 802 automatically modifies its threshold of acceptable data perturbations, depending on the velocity of the vehicle 102. The term "perturbation" in the context of this document refers to a deviation from a regular course. The semi-adaptive functioning of the GPS Kalman filter 802 optimizes the response and the accuracy of the present invention. Generally, when the vehicle 102 increases its velocity by a specified amount, the GPS Kalman filter 802 will raise its acceptable noise threshold. similarly, when the vehicle 102 decreases its velocity by a specified amount the GPS Kalman filter 802 will lower its acceptable noise threshold. This automatic optimization technique of the present invention provides the highest degree of accuracy under both moving and stationery conditions.

In the best mode of the present invention, the threshold of the GPS Kalman filter 802 does not vary continuously or in very minute discreet intervals. Rather, the intervals are larger discreet intervals and, therefore, less accurate than a continuously varying filter. However, the Kalman filter 802 of the present invention is easy to implement, less costly, and requires less computation time than with a continuously varying filter. However, it should be noted that using a continuously varying filter is possible and is intended to be included herein.

For operation, the GPS Kalman filter 802 must be given an initial value at system start-up. From the initial value and GPS data collected by the GPS receiver 706, the GPS Kalman filter 802 extrapolates a current state (which includes the first position estimate and the vehicle velocity for northing, easting and altitude). The GPS Kalman filter 802 operates in a cyclical manner. In other words, the extrapolated current state is assumed to be the initial value for the next iteration. It is combined/filtered with new GPS data (an update) to derive a new current state.

The way that the GPS data is utilized is dependent on a priori saved file called a control file 820. The control file 820 will determine the following: (1) the noise threshold, (2) the speed of response, (3) the initial states of vehicle position and velocity, (4) the extent of deviation before a reset of the GPS Kalman filter 802 occurs, (5) the number of bad measurements allowed, and/or (6) the time allotted between measurements.

The GPS processor 710 then computes the estimated pseudoranges, the first position estimate, and the vehicle velocity (from Doppler shift) using the above current state and any biases, including the clock biases and the spatial biases. However, the GPS processor 710 discards the computed velocity data when the C/A code, rather than the carrier frequency, is utilized by the GPS receiver 706 to derive the vehicle velocity. The rationale for discarding the vehicle velocity is that experimentation has shown that it is not adequately accurate when derived from the C/A code.

Vehicle velocities derived from the carrier frequency (Doppler shift) are much more accurate than the velocities derived from the C/A code. In the preferred embodiment, the first estimated position (and vehicle velocity if derived from the carrier frequency) are encoded on GPS Signal 716 and sent on to the VPS main processor 1002 shown on Figure 10.

As previously discussed, the GPS processor 710 analyzes both the carrier frequency and the C/A code. Unlike data demodulated from the C/A code, data may be retrieved from the carrier frequency by the GPS receiver 706 at approximately 50 Hz (not approximately 2 Hz, as is the case for demodulating C/A code). This increased speed allows the present invention to produce more precise position and velocity determinations with less error.

Figure 8 illustrates other functions of the GPS processor 710 in the preferred embodiment. However, the present invention contemplates any method by which GPS data can be processed to determine pseudoranges. As shown at a flowchart block 816, a console function controls the operation of the *GPS* console 2. This console function regulates the operation of the GPS Kalman filter 802 by providing a user interface into the filter.

The VPS communications function 818 controls the outputs of the GPS Kalman filter 802 which are directed to the VPS 1000. At a flowchart block 806, it is shown that the GPS Kalman filter 802 requests and decodes data from the GPS receiver 706, which data is routed through an IPROTO function 804 shown at a flowchart block 804.

As shown, the IPROTO function 804 resides in the GPS intercommunications processor 708 and executes tasks associated with the GPS intercommunications processor 708. In the preferred embodiment, the IPROTO function 804 is the model number XVME-081, which is commercially available from Xycom Inc.

As shown at a flowchart block 810 the data transmitted over the communication channel 618 enters the IPROTO function 804. Much of this data is ultimately destined for the GPS Kalman filter 802. The communications manager function shown at a flowchart block 808, coordinates the incoming data from the IPROTO function. The communications manager function 808 also coordinates data received from an ICC function which is shown in a flowchart block 812. The ICC function 812 exchanges data with the data- radio 714 (via GPS intercommunications processors 720) and the GPS data collection device 718 as shown.

The GPS console 712 is well known in the art. Many types of devices are commercially available which provide the desired function. One such device is commercially available from Digital Equipment Corporation of Maynard, Massachusetts Model Number VT220. The GPS console 712 displays processor activity data regarding the GPS intercommunications processor 708 and the GPS processor 710.

The GPS processor 710 is coupled to a GPS console 722 and a GPS communications interface processor 720. The GPS console 722 is well known in the art. Many types of devices are commercially available which provide the desired console function. One such device is commercially available from Digital Equipment Corporation of Maynard, Massachusetts Model Number VT220. The GPS console 722 provides the user interface from which the GPS processor 710 can be activated and monitored.

The GPS communications interface processor 720 is essentially an I/O board. It is coupled to a data-radio 714 and a GPS data collection device 718. The GPS communications interface processor 720 coordinates data exchange between the GPS processor 710 and both the data-radio 714 and the GPS data collection device 718. The communications interface processor 720 in the preferred embodiment is the model no. MVME331, which is commercially available from Motorola Inc., U.S.A.

The data-radio 714 establishes a communication link between the GPS processor 710 (through the GPS communications interface processor 720) at the vehicle 102 to a similar data-radio 714 located at the base station 188 (see Figure 6). In the preferred embodiment, the data-radio 714 communicates synchronously at 9600 baud using RF frequencies. The data-radio 714 at the base station 188 provides periodic updates on the amount of spatial bias and clock bias for each satellite to the data-radio 714 at the vehicle 102 at a rate of 2 Hz (twice per second). Spatial and clock biases computed by the base station 188 will be discussed further below.

The GPS data collection device 718 can be any of numerous common electronic processing and storage devices such as a desktop computer. Any personal computer (PC) manufactured by the International Business Machines Corporation (IBM) of Boca Raton, Florida, U.S.A., can be implemented.

C. <u>Motion Positioning System (MPS)</u>

The MPS 900 of the preferred embodiment is illustrated in Figure 9. The MPS 900 derives the second position estimate of the vehicle 102. Usually, this second position estimate is combined and filtered with the first position estimate to thereby derive a more accurate third position estimate. However, it is envisioned that in some instances the second position estimate may be utilized exclusively as the third position estimate, when the first position estimate is deemed to be drastically inaccurate.

For the MPS 900, the preferred embodiment envisions the combination of the odometer 902 and the IRU 904. However, the IRU 904 could be utilized without the odometer 902. The odometer and the IRU 904 are coupled to an MPS intercommunications processor 906 to thereby comprise the MPS 900. IRUs and odometers are well known in the art and are commercially available, respectively, from Honeywell Inc. of Minneapolis, Minnesota, Model Number HG1050-SR01 and from Caterpillar Inc. of Peoria, Illinois, Part Number 7T6337.

The IRU 904 comprises ring-laser gyroscopes and accelerometers of known design. The IRU 904 used in the preferred embodiment is a replica of the system used by Boeing 767 aircrafts to determine aircraft position, except that the IRU 904 has been modified to account for the lesser dynamics (for example, velocity) that the vehicle 102 exhibits relative to that of a 767 aircraft.

The IRU 904 can output vehicle position at 5 Hz, velocity at 10 Hz, roll at 50 Hz, pitch at 50 Hz, and yaw data at 50 Hz. Furthermore, in the preferred embodiment, the vehicle odometer 902 can output the distance travelled by the vehicle 102 at 20 Hz.

The laser gyroscopes of the IRU 904, in order to function properly, must at first be given an estimate of the vehicle 102's latitude, longitude and altitude. Using this data as a baseline position estimate, the gyroscopes then use a predefined calibration in conjunction with forces associated with the rotation of the Earth 172 to determine an estimate of the vehicle 102's current position.

This information is then combined by the IRU 904 with data acquired by the IRU 904 accelerometers to produce a more accurate, second position estimate of the vehicle's current position. The second position estimate from the IRU 904, and the data from the vehicle odometer 902 are transmitted to the MPS intercommunications processor 906 as shown by respective arrows 910 and 908 of Figure 9. Arrow 114 of Figure 1 includes arrows 908 and 910.

Upon experimentation, it has been determined that the IRU 904 may provide erroneous second position estimates of the vehicle 102 due to imprecise constituent parts. More specifically, in the preferred embodiment, it has been observed that the directional output of the IRU 904 has drifted counterclockwise from the direction north during operation. The drift is dependent upon the direction in which the vehicle 102, and consequently the IRU 904, is travelling.

Moreover, the drift can be defined by an IRU drift equation. The IRU drift equation can be derived similar to the construction of path equations described in regard to the weighted path history technique or similar to the construction of parabolic equations described in regard to the parabolic bias technique .

After derived, the IRU drift equation can be utilized to extrapolate more accurate second position estimates.

In the preferred embodiment, the intercommunications processor 1002 comprises the commercially available 68000 microprocessor from Motorola Inc. The intercommunications processor 1002 coordinates exchange of data between the MPS 900 and the VPS 1000. Any processor with similar function as described herein may be utilized.

D. Vehicle Positioning System (VPS)

Turning now to Figure 10, the preferred embodiment of the architecture of the VPS 1000 is depicted. Figure 11 shows in detail a diagram of the VPS 1000 connected to the GPS processing system 700 and MPS 900.

GPS processing system 700 and MPS 900 are independently coupled to the VPS main processor 1002. The independent coupling is an important novel feature of the present invention. Because they are independent, the failure of one of the systems will not cause the other to become inoperative. Thus, if the GPS processing system 700 is not operative, data can still be collected and processed by the MPS 900 and, consequently, the VPS 1000. The GPS processing system 700 and the MPS 900 transmit signals 716, 908, 910 to the VPS main processor 1002, as shown. These signals contain position, velocity, time, pitch, roll, yaw, and distance data (see Figures 7 and 9 and associated discussions).

The VPS main processor 1002 is coupled to the VPS I/O processor 1004. The VPS main processor 1002 transmits a signal 1008 to a VPS I/O processor 1004, as shown. The signal 1008 comprises the third position estimate. The third position estimate is derived from the GPS, IRU, and odometer data noted above, and more specifically, the first and second position estimates of the vehicle 102.

The present invention contemplates any system and method by which the signals indicated by arrows 716, 908 and 910 can be received by the VPS main processor 1002 from the GPS processing system 700 and MPS system 900 and forwarded to the VPS main processor 1002. The VPS main processor 1002 is the 68020 microprocessor, which is commercially available from Motorola Inc., U.S.A.

Figure 12 is an intermediate level block diagram 1200 of a VPS main processor 1002 of Figure 10 showing a VPS Kalman filter 1202 and a weighted combiner 1200. As shown, the GPS signal 716 and the odometer signal 908 are transmitted directly to a weighted combiner 1204. The IRU signal 910 is transmitted into a VPS Kalman filter 1202. In the preferred embodiment, the GPS signal 716 is transmitted at a rate of 2 Hz. The odometer signal 908 is transmitted at a rate of 20 Hz. Moreover, the IRU signal 910, which includes the second position estimate, is transmitted at a rate of 50 Hz.

The VPS Kalman filter 1202 processes the IRU signal 910, filters extraneous noise from the data, and outputs the processed data to the weighted combiner 1204. Further, the VPS Kalman filter 1202 receives a signal from the weighted combiner 1204, as shown by an arrow 1208, which is used to reset the VPS Kalman filter 1202 with new position information.

The weighted combiner 1204 processes the signals and gives a predetermined weighing factor to each data based on the estimated accuracy of data gathering technique used. Thus, in the preferred embodiment, the first position estimate of the GPS signal 716 is weighted heavier than the second position estimate of the IRU signal 910. The reason for this weighing scheme is that the first position estimate is inherently more accurate than the second position estimate from the IRU 904.

However, velocity can be more accurately determined by the IRU. Therefore, the velocity component of the IRU signal 910 can be weighted heavier than the velocity component of the GPS signal 716. In the preferred embodiment of the present invention, the velocity component of the IRU signal 910 is used exclusive of the velocity component of the GPS signal 716.

The weighted combiner 1204 produces an output 1206 at 20 Hz. The output 1206 contains all computed data and is sent to two locations: the VPS Kalman filter 1202, as shown by an arrow 1208 and the VPS I/O processor 1004, as shown by an arrow 1008. The output 1206 contains time information relative to the GPS satellites. The output 1206 further contains information relative to vehicle position, velocity, yaw, pitch, and roll. Finally, note that the VPS output 1206 comprises the third position estimate of the vehicle 102.

Another output shown at an arrow 1018 from the weighted combiner 1204 contains only velocity data pertaining to the vehicle 102. Velocity data is sent to the GPS processing system 700 from the VPS main processor 1002. The velocity data is used to increase the accuracy of first position estimates as is discussed hereinafter.

The present invention contemplates any system and method by which the signals 716, 908, and 910 can be processed at the VPS main processor 1002 in accordance with the above noted process steps. In the preferred embodiment, the VPS main processor 1002 is the 68020 microprocessor, which is commercially available from Motorola Inc., U.S.A.

Figure 12A illustrates a super Kalman filter 1200A of the present invention. The super Kalman filter 1200A is a system and method for processing data to increase the accuracy of position estimates of the vehicle 102. specifically, the super Kalman filter directly increases the accuracy of the first position estimate. Accordingly, the accuracy of the third position estimate is indirectly enhanced. In the preferred embodiment, the super Kalman filter 1200A comprises software within the architectures of the GPS processing system 700 at Figure 7 and the VPS 1000 at Figure 10. It is envisioned that the super Kalman filter 1200A could be constructed in hardware, for example, *as* in an integrated circuit, an optical filter, or the like.

As shown by the arrow an 1210, the GPS Kalman filter 802 receives first data from a terrestrial position determination system, which could include, for example, GPS data and/or pseudolite data. The GPS Kalman filter 802 operates on the data and outputs the first position estimate (FPE), as indicated by the arrow 716.

As shown by the arrow 910, the VPS Kalman filter 1202 receives MPS data from the MPS 900. The VPS Kalman filter operates on the MPS data and outputs the second position estimate (SPE).

The weighted combiner 1204 receives the FPE and the SPE as indicated by respective arrows 716 and 1210. The weighted combiner 1204 outputs the velocity 1018 of the vehicle 102 to the GPS Kalman filter 802. The GPS Kalman filter 802 adapts pursuant to the vehicle velocity 1018 of the vehicle to increase the accuracy of the FPE at arrow 716.

The GPS Kalman filter 802 can be designed to adapt in discreet time intervals or to adapt continuously. In the preferred embodiment, the GPS Kalman filter 802 adapts in discreet time intervals due to a balance between cost and performance.

It is envisioned that only one Kalman filter (not shown) could be implemented to provide for an accurate terrestrial position determination system. More specifically, it is possible to have the GPS processing system 700 and the MPS 900 (having an odometer 902 and/or an IRU 904) connected to only one Kalman filter which derives the third position estimate. However, such a configuration would not possess all of the favorable attributes as the preferred embodiment.

The super Kalman filter of Figure 12 and 12A has the beneficial attributes of both a single Kalman filter and of separate Kalman filters. As configured, the GPS Kalman filter 710 and the VPS Kalman filter 1202 can continuously exchange data to thereby increase the accuracy of first and second position estimates. Consequently, third position estimates are enhanced. In a sense, a single Kalman filtering system resides between the ultimate output of the third position estimate and the position data being inputted.

In a different sense, the GPS Kalman filter 710 and the VPS Kalman filter 1202 act entirely as separate, independent filters. If, for example, either GPS data or MPS data is tainted, then the tainted data can be totally or partially disregarded via the weighted combiner 1204 without affecting the accuracy of the non-tainted data. In a system utilizing a single Kalman filter, the ultimate output, or third position estimate, will be substantially inaccurate if either the GPS data or the MPS data is substantially tainted.

Referring now back to Figure 10, the VPS I/O processor 1004 is coupled to a VPS communications interface processor 1020. The communications interface processor 1020 is the MVME331 processor, which is commercially available from Motorola Inc., U.S.A. Any processor accomplishing the same purpose as described below may be utilized.

The VPS communications interface processor 1020 may be coupled to three different devices: (1) a VPS console 1012, (2) a data collection device 1014, and (3) the navigation system 1022. The VPS communications interface processor 1020 routes the data, including the third position estimate, contained in output 1016 to the above three devices at a rate of 20 Hz.

The VPS console 1012 is well known in the art, and is commercially available from Digital Equipment Corporation, of Minneapolis, Minnesota, Model Number VT220. This VPS console 1012 is used to display the current status of the VPS I/O processor 1004.

The VPS data collection device 1014 can be any of numerous commercially available electronic processing and storage devices, for example, a desktop PC. Any MacIntosh PC available from Apple Computer of Cupertino, California, can be used successfully to achieve this purpose.

The navigation system 1022 comprises the features associated with the navigation of the vehicle 102. The VPS 1000 transmits the third position estimate to the navigation system 1022, so that the navigation system 1022 can accurately and safely guide the autonomous vehicle 102.

E. Base Station

With reference to Figure 7, the host processing system 186 at the base station 188 comprises the GPS processing system 700 of Figure 7. The purposes of the host processing system 186 at the base station 188 are to (1) monitor the operation of the vehicle 102, (2) provide a known terrestrial reference point from which spatial biases can be produced, and (3) provide any other information to the vehicle 102 when necessary over the high-speed data communication channel 618.

The base station 188 may be located close to the vehicle 102, preferably within 20 miles. The close geographical relationship will provide for effective radio communication between the base station 188 and the vehicle 102 over the communication channel 618. It will also provide an accurate reference point for comparing satellite transmissions received by the vehicle 102 with those received by the base station 188.

A geographically proximate reference point is needed in order to compute accurate spatial biases. Spatial and clock biases are, in effect, the common mode noise that exists inherently in the NAVSTAR GPS and the GPS processing system 700. Once computed at the base station 188, the spatial and clock biases are then sent to the vehicle 102 using the data-radio 714, as shown in Figure 7. The spatial biases are computed using various methods which are discussed further below.

The host processing system 186 at the base station 188 may further coordinate the autonomous activities of the vehicle 102 and interface the VPS 1000 with human supervisors.

F. Satellite Based Accuracy Improvements

The present invention improves the accuracy of the position estimates of the vehicle 102 via a number of differential correction techniques. These differential bias techniques are used to enhance the first, second, and third position estimates.

Several of these differential correction techniques are designed to directly remove errors (noise or interference) in the calculation of pseudoranges R0, R2, R4, and R6 (both actual and estimated pseudoranges). The removal of these errors results in a more precise first position estimate, which is outputted by the GPS processing system 700 to the VPS 1000, and ultimately, in a more precise third position estimate, which is outputted by the VPS 1000 to the navigation system 1022.

In the preferred embodiment, the host processing system 186 at the base station 188 is responsible for executing these differential techniques and for forwarding the results to the vehicle 102. Recall that the host processing system 186 comprises the GPS processing system 700, just as the vehicle 102. The term "differential" is used because the base station 188 and the vehicle 102 use independent but virtually an identical GPS processing system 700. Furthermore, because the base station 188 is stationary and its absolute position is known, it serves as a reference point from which to measure electronic errors (noise or interference) and other phenomena inducing errors.

1. Constellation Effects

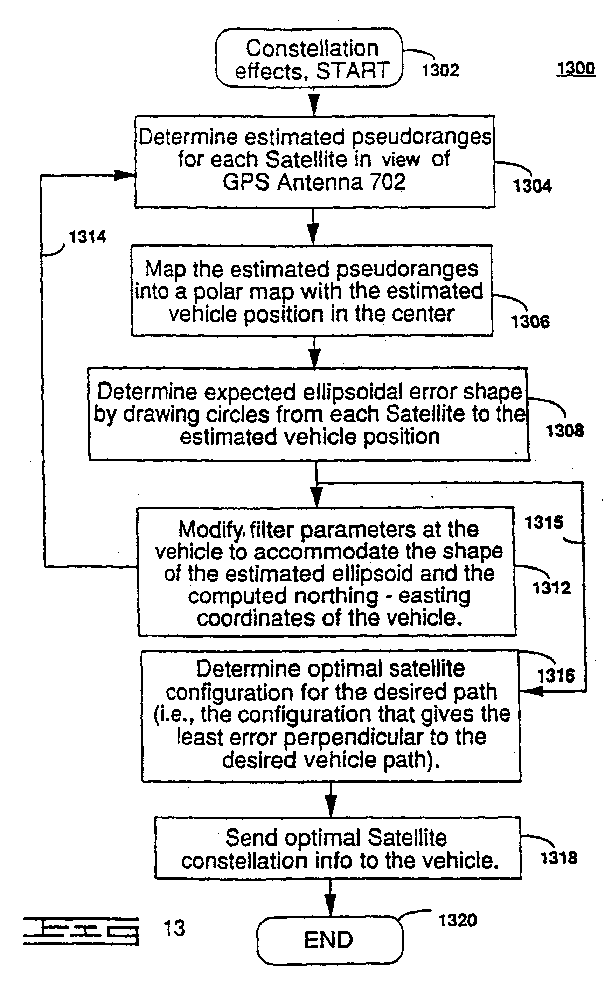

Figure 13 is a flowchart 1300 of the constellation effects method for improving the accuracy of first position estimates in the preferred embodiment of the present invention. The method may be implemented in the GPS processing system 700 at the vehicle 102. Alternatively, the method may be implemented in the host processing system 186 at the base station 188. In the latter case, the information determined by the method would subsequently be communicated to the vehicle 102 for appropriate enhancement of first position estimates.

The flowchart 1300 shows a method for selecting the best satellite constellation in view of the GPS antenna 702. For the vehicle 102, many of the GPS satellites 132-170 may be in view of the GPS antenna 702. Only a subset of these satellites are selected to form a particular constellation of any number of satellites (at least four in the preferred embodiment).

Essentially, the "best" or "optimal" constellation is selected based upon geometrical considerations. The location in space of the GPS satellites 132-170 in view of the GPS antenna and the intended path of the vehicle 102 are taken into account as will be discussed in detail below.

The flowchart 1300 begins at a flowchart block 1302. At flowchart 1304, the estimated pseudoranges of each GPS satellite in view of and relative to the GPS antenna 702 are computed. Estimated pseudoranges are defined in the context of this document as estimated pseudoranges derived from almanac data and the ephemeris from GPS satellites. Almanac data refers to previously recorded data which stores the location in space of the GPS satellites 132-170 at specific times during the day.

For the NAVSTAR GPS, the almanac data is in the form of an equations with variables. These almanac equations are publicly available from the U.S. government. Some of the variables identify the GPS satellites 132-170. Further requisite inputs include the time at which an estimated pseudorange is to be determined and the known location of the relevant point on the Earth.

To determine the estimated pseudoranges pertaining to each GPS satellite, the following information is inserted into these almanac equations: (1) the parameters identifying the GPS satellites, which are encoded in the GPS data from the GPS satellites, (2) the current time, and (3) the known location of the base station 188.

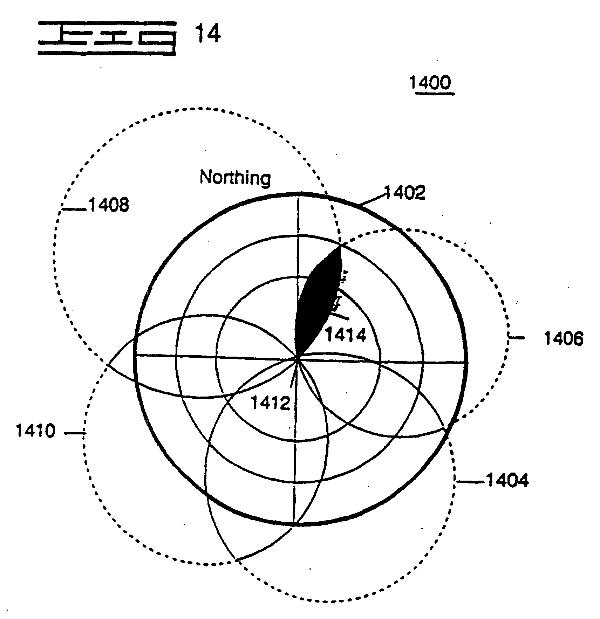

Next, at flowchart block 1306, the estimated pseudoranges are plotted using polar coordinates. Figure 14 is a polar plot 1400 on a coordinate system 1402 illustrating a set of estimated pseudoranges circles 1404, 1406, 1408, and 1410 pertaining to a GPS satellite constellation of four GPS satellites (not shown). The estimated pseudorange circles 1404, 1406, 1408, and 1410 are drawn so that an intersection exists at the center 1412 of the polar map 1400. The coordinate system 1402 reflects azimuth from the direction north as indicated.

The relative distances between the GPS satellites and the GPS antenna are also represented in the polar map 1400 by the size of the estimated pseudorange circles 1404, 1406, 1408, and 1410. Specifically, for example, the GPS satellite represented by the estimated pseudorange circle 1406 is further away than the GPS satellite represented by the estimated pseudorange circle 1408.

With reference to Figure 14, a shaded ellipsoid region 1412 shows the possible position of the vehicle 102 when the GPS satellites (not shown) giving rise to the estimated pseudorange circles 1406 and 1408 are considered. An important parameter in the ellipsoid representation is the ratio between the semi-major and semi-minor access of the ellipsoid, called the geometric ratio of access factor (GRAF). It is envisioned that the GRAF can be computed at a next flowchart block 1308.

With reference to the flowchart block 1308, the GRAF is used along with the angle of the major access to compute a weighing factor, which will ultimately assist the GPS processing system 700 to compute a more accurate first position estimate as described below. As shown in flowchart block 1312, the GPS Kalman filter 802 in the GPS processing system 700 at the vehicle 102 is modified to accommodate for the shape of the estimated ellipsoid and for the computed northing-easting coordinates of the vehicle 102, as illustrated in Figure 14. Moreover, as indicated by an arrow 1314, the foregoing procedure is repeated continuously so as to continuously enhance the estimated position of the center 1412. At a flowchart block 1316, the optimal satellite constellation for the desired vehicle path is determined. The optimal constellation will be one that gives the least error perpendicular to the desired vehicle path.

As shown at a flowchart block 1318, the optimal satellite constellation is transmitted to the vehicle 102 over the data radio 714. The vehicle 102 uses the optimal satellite constellation to compute first position estimates.

2. Differential Correction Techniques

a. Original Bias Technique

Referring now to Figure 15, a flowchart 1500 illustrates the original bias technique, which is known in the conventional art. The original bias technique is a method for computing spatial biases to increase the accuracy of first position estimates, which ultimately participate in defining third position estimates. The original bias technique, described in detail below, uses a known position of the base station 188 as a reference point for determining spatial biases (original biases).

The original bias technique may be implemented in the GPS processing system 700 at the vehicle 102. Furthermore, the original bias technique may be implemented in the host processing system 186 at the base station 188. In the latter approach, the information determined by the method would subsequently be communicated to the vehicle 102 for appropriate enhancement of first position estimates. Furthermore, the preferred embodiment adopts the latter approach and implements the original bias technique in the host processing system 186 at the base station 188.

The original bias technique as shown in Figure 15 begins at flowchart block 1502. As shown at a flowchart block 1504, the actual pseudorange (base actual pseudorange) and the estimated pseudorange (base estimate pseudorange) for each GPS satellite in view of the GPS antenna 702 are computed in the host processing system 186 at the base station 188. The base actual pseudorange is computed independently of the base estimated pseudorange. The base actual pseudorange is computed by the GPS receiver 706 in the host processing system 186. Moreover, the base estimated pseudorange is computed by the GPS processor 710.

Base actual pseudoranges are calculated by measuring the propagation time lapse between transmission of electromagnetic signals from a GPS satellite (or pseudolite) and reception of the signals at the host processing system 186 at the base station 188. The electromagnetic signals encode the time of transmission. Further, the GPS receiver 706 records the time of reception. By assuming that these electromagnetic signals travel at the speed of light, or $2.9979245898 * 10^8$ meters per second, the actual pseudorange for each satellite can be determined by multiplying the propagation time lapse by the speed of light (in the appropriate units).

Base estimated pseudoranges are computed from (1) almanac data (in NAVSTAR GPS, an almanac equation), (2) the time of transmission of the electromagnetic signals from the GPS satellites, and (3) the known position (base known position) of the base station 188. The transmission time and the base known position (BKP) is inserted into the almanac equation to derive an estimated pseudorange for a satellite.

Clock biases (base clock bias) between the circuitry clocks of the host processing system 186 and the recognized GPS satellites are also computed, as shown at the flowchart block 1604. In the preferred embodiment, one base clock bias is calculated for all of the satellites. The base clock bias is computed by counting clock pulses of a satellite and the host processing system 188 over a preselected time period. The pulses are then compared to derive a difference. The difference is then multiplied by the speed of light, or $2.998 * 10^8$ meters per second, so as to convert the clock bias into units of length. However, it should be noted that any method of computing and expressing a base clock bias can be incorporated into the present invention.

As shown in flowchart block 1508, a spatial bias (original bias) is calculated by subtracting both the base estimated pseudorange and the base clock bias (in units of length) from base actual pseudorange. The original bias is caused by many different effects, such as atmospheric conditions, receiver error, etc. It should be noted that the calculation of the original bias cannot be performed by using the vehicle 102 as a reference point, because the actual position of the vehicle 102 is not known. However, the computation of the original biases could be performed at the vehicle 102.

As shown at a flowchart block 1510, the GPS Kalman filter 802 in the host processing system 188 is updated with the original bias. Further, as shown by an arrow 1512, the process of computing original biases is performed continuously and the derived original biases are used to iteratively update the GPS Kalman filter 802.

Because the vehicle 102 is in close proximity to the base station 188, the error in the pseudorange computations is assumed to be identical. Therefore, the original bias which has been determined as shown in the flowchart block 1508 is also used to modify the actual pseudoranges produced by the GPS processing system 700 of the vehicle 102. Accordingly, as shown at a flowchart block 1514, the original biases are transmitted from the base station 188 to the vehicle 102 using the data radios 620 and 622.

The original biases are used to update the GPS Kalman filter 802 in the vehicle 102. The updating of the GPS Kalman filter 802 results in more accurate first position estimates.

b. Parabolic Bias Technique

As the GPS satellites 132-170 rise and fall in the sky, the path formed by each GPS satellite 132-170 follows a parabola with respect to tracking pseudoranges on or near the Earth's surface. Therefore, a parabolic function can be derived which represents the path of each GPS satellite in the sky. The foregoing describes the essence of the parabolic bias technique, which is performed in the host processing system 186 at the base station 188 in the preferred embodiment. It should be noted, however, that the parabolic bias technique may be performed at the vehicle 102.

Turning now to Figure 16, a flowchart 1600 illustrates the parabolic bias technique. A parabolic function (model) is computed for each GPS satellite in the view of the GPS antenna 702 at the base station 188.

The flowchart 1600 begins at a flowchart block 1602. As shown at a flowchart block 1604, at a time t(n), actual pseudoranges are determined for each GPS satellite in view of the GPS antenna 702 at the base station 188, using the GPS receiver 706, as described above. As shown at a flowchart block 1606, the actual pseudoranges (for each GPS satellite) are incorporated into parabolic best fit models for each GPS satellite. Thus, at the flowchart block 1606 one point is added on the parabolic model for each GPS satellite.

As shown at a flowchart block 1608, a test is made as to whether enough points on the parabolic models have been determined to estimate a parabolic function for each GPS satellite. The number of points that have been collected will determine a particular statistical $R^2$ value. In the preferred embodiment, the $R^2$ value is computed as follows:

$$R^2 = \frac{SUM^2(\text{est. pseudorange(t) - mean of est. pseudoranges})}{SUM^2(\text{act. pseudorange(t) - mean of act. pseudoranges})}$$

The above standard statistical equation is well known in the conventional art. For a further discussion on this equation, refer to Draper, Applied Regression Analysis, 1966 edition. By defining N as the number of calculated pseudoranges, both estimated and actual, and by mathematically expanding the equation, the following more usable form of the equation can easily be derived:

$$R^2 = \frac{N * SUM(\text{square of all est. pseudoranges}) - 2 * SUM(\text{est. pseudoranges}) * SUM(\text{actual pseudoranges}) + SUM(\text{actual pseudoranges})^2}{N * SUM(\text{square of all actual pseudoranges}) - SUM(\text{actual pseudoranges})}$$

As shown at the flowchart block 1608, if this $R^2$ value is greater than 0.98 in the preferred embodiment, then the parabolic model is deemed to be accurate enough to estimate the future path of the GPS satellite. If the $R^2$ value is less than or equal to 0.98, then more points on the parabolic model must be computed. These points are computed by incorporating the pseudorange data which is continually being computed by the GPS receiver 706.

As shown at a flowchart block 1610, the N value increments to show that the time at which the pseudorange is computed, as shown in the flowchart block 1604, has increased. Because the GPS receiver 706 outputs actual pseudoranges for each GPS satellite at 2 Hz (twice a second), each N increment should represent approximately one half second.

If enough data points have been collected such that the $R^2$ value is greater than 0.98, then as shown in a flowchart block 1612, the parabolic models are deemed accurate enough to represent each satellite's orbital path. As shown in the flowchart block 1612, the parabolic models represent points on the past and future satellite paths. Now that the parabolic models are complete, future points on the models can be extrapolated, as shown at a flowchart block 1614.

As shown at the flowchart block 1614, for the time T(n+1) the locus point on each of the parabolic models is computed. The locus points are the expected actual pseudoranges of the GPS satellites at time T(n+1). Once this locus point is computed, the range for the locus point (distance between the GPS antenna 702 and the GPS satellite) is computed, as shown at a flowchart block 1616.

At a flowchart block 1618, the actual pseudoranges are computed for time T(n+1), which is the current time in the preferred embodiment. The actual pseudoranges are computed by the GPS receiver 706 as described above. These actual pseudoranges at T(n+1) are incorporated into the parabolic best fit models during the next iteration of the flowchart 1600.

As shown at a flowchart block 1620, the actual pseudorange computed at time T(n+1) and the base clock bias (in units of length) for each satellite are subtracted from the locus point range to generate the parabolic bias for each satellite.

As indicated in flowchart block 1624, the parabolic biases are then transmitted to the GPS processing system 700 of the vehicle 102 via the data radio 714. The GPS processing system 700 at the vehicle 102 utilizes the parabolic biases to increase the accuracy of its actual pseudorange (vehicle actual pseudoranges) calculations to thereby increase the accuracy of first position estimates.

c. Base Residuals Bias Technique

Figure 17 illustrates a flowchart 1700 for implementing the base residuals bias technique. In the preferred embodiment, the base residuals bias technique is performed in the host processing system 186 at the base station 188. After the base residuals bias has been computed at the base station 188, it is transmitted to the GPS processing system 700 of the vehicle 102. The GPS processing system 700 at the vehicle 102 uses the base residuals bias to enhance the accuracy of first position estimates.

A base residual bias in the context of this document is a difference in the base known position of the base station 188 and the position estimate (first position estimate, if calculated by the vehicle 102) of the base station 188 which is computed by the host processing system 186 at the base station 188. To illustrate how this functions, assume the base station 188 is at the corner of Elm and Maple streets. Also assume the GPS processing system 700 at the base station 188 estimates the position of the base station 188 to be four miles due south of the base known position (the corner of Elm and Maple). It is obvious that the base residuals bias is a distance equal to four miles in a due south direction.

Because the GPS processing system 700 on the vehicle 102 is identical to the GPS processing system 700 at the base station 188, the four mile error in computation can be deemed to be occurring at the vehicle 102 as well as the base station 188. The vehicle 102 can then use this information in its GPS processor 710. In effect, the GPS processor on the vehicle 102 will modify its first position estimates to account for a four mile due south error in the data.

The methodology of the base residuals bias technique will now be discussed in detail with reference to Figure 17. At a flowchart block 1704, the exact polar coordinates x0, y0, z0 of the base station 188 is obtained from the base known position.

At a flowchart block 1706, base actual pseudoranges, base estimated pseudoranges, and base clock biases are computed by the host processing system 186 at the base station 188. If the GPS receiver 706 on the vehicle 102 is configured to read data from a particular constellation of GPS satellites (not shown), then the GPS receiver 706 at the base station 188 will use the same satellite constellation. As indicated in flowchart block 1708, a position estimate (base position estimate) of the base station 188 is computed. In the preferred embodiment, the base position estimate is computed in the same way as the first position estimate at the vehicle 102.

Next, at a flowchart block 1710, the base position estimate is compared to the base known position. The difference (such as the four miles in the above example), if any, between the base position estimate and the base known position is referred to in this document as the base residuals bias.

The base residuals bias is transmitted to the vehicle 102 via the data radio 714, as indicated in flowchart block 1712. The base residuals bias is processed at the GPS processor 710 of the vehicle 102 to enhance the accuracy of the first position estimate.

d. <u>Base Correlator Bias Technique</u>

Figure 17A illustrates a high level flowchart 1700A of a base correlator technique utilized in the present invention to improve the accuracy of the first position estimates of the vehicle 102. Generally, the technique involves using the known position of a reference point as a way of increasing accuracy. In the preferred embodiment, the base station 188 serves as the reference point. The methodology of flowchart 1700A will be discussed in detail below with specific reference to Figure 6.

In the base correlator technique, spatial biases (base spatial biases) and clock biases (base clock biases) are initially computed by the host processing system 186 at the base station 188 of Figure 6, as indicated in flowchart block 1705. The base spatial biases can be any spatial error computation including, but not limited to, the original and parabolic biases discussed previously in this document.

Specifically, recall that the original bias is calculated by subtracting both estimated pseudoranges (base estimated pseudorange) and base clock biases from actual pseudoranges (base actual pseudoranges). The base estimated pseudoranges are determined from (1) almanac data, (2) the time of transmission of the satellite signals, and (3) the known position (base known position) of the base station 188. The base clock biases are the differences in the clock times between the transmission circuitry of GPS satellites and/or pseudolites and the reception circuitry of the base station 188. The base clock biases are expressed in terms of units of length by multiplying them by the speed of light. The base actual pseudoranges are determined from the propagation time delays between transmission and reception of the electromagnetic signals sent from GPS satellites and/or pseudolites to the base station 188.

Moreover, the parabolic bias is computed by constructing parabolic models for the base actual pseudoranges of each observed GPS satellite and extrapolating values from the parabolic models. In the preferred embodiment, the parabolic biases are the base actual pseudoranges minus the value extrapolated from the constructed parabolic models and minus the base clock biases (in units of length).

As shown in flowchart block 1709, the base station 188 transmits to the vehicle 102 along communication channel 618 its base actual pseudoranges, base estimated pseudoranges, base spatial biases, base clock biases, and the base known position of the base station 188. Intended to be a very accurate estimate itself, the base known position can be determined by any appropriate means, including but not limited to, the novel systems and methods of the present invention or any other conventional systems and methods. After the vehicle 102 receives the foregoing information from the base station 188, the GPS processor 710 of the vehicle 102 uses this information in the calculation of its own spatial biases (vehicle spatial biases).

Before the vehicle 102 performs computations to derive the vehicle spatial biases at flowchart block 1713, its GPS receiver 706 computes its own actual pseudoranges (vehicle actual pseudoranges), its own estimated pseudoranges (vehicle estimated pseudoranges), and its own clock biases (vehicle clock biases). From the vehicle actual pseudoranges, its GPS processor 710 subtracts the vehicle estimated pseudoranges, the vehicle clock biases, and the base spatial biases which were sent from the base station 188 in flowchart block 1709. The result is a more accurate calculation of the vehicle spatial bias at the vehicle 102.

The vehicle spatial bias is then utilized to more accurately modify the first position estimate (FPE) of the vehicle 102, as shown in flowchart block 1717. It should be noted that the FPE is an estimate of the absolute position (with respect to the Earth 172's center) of the vehicle 102.

Beginning with a flowchart block 1721, an iterative method is instituted for improving the FPE of the vehicle 102. The method envisions using the base station 314 as a sort of correlator. In the preferred embodiment, the method is implemented by the GPS Kalman filter 802.

At the flowchart block 1721, an estimated relative position (HBE) of the base station 188 with respect to the vehicle 102 is determined. The initial state of the FPE is assumed to be the current value of FPE(i), where i is the positive integer value corresponding to the iteration. Consequently, when the method progresses from flowchart block 1717 to block 1721, the current value of FPE(i) will be FPE(0).

Still at flowchart block 1721, the vehicle 102 next calculates an estimated position (base estimated position; BEP) of the base station 188 using the base actual pseudoranges, base estimated pseudoranges, base spatial biases, and base clock biases, which all were transferred to the vehicle 102 from the base station 188. It should be noted that the BEP is an absolute position (relative to the Earth 172's surface). By subtracting the BEP from the FPE, an estimated relative position (HBE) of the base station 188 with respect to the vehicle 102 is determined.

As indicated at flowchart block 1725, an HBA is determined. HBA is another estimated relative position of the base station 188 with respect to the vehicle 102. However, unlike the HBE, the HBA is computed by subtracting the base known position (BKP) from the FPE. Thus, HBE and HBA differ in that the former is calculated using GPS data and/or pseudolite data whereas the latter is calculated using the known data.

Next at a flowchart block 1729, an offset is computed by subtracting HBE and HBA. In the preferred embodiment, the offset is a vector in a two-dimensional, orthogonal coordinate system. It is envisioned that a three-dimensional vector may be implemented to consider elevational differences between the vehicle 102 and the base station 188.

At a flowchart block 1733, a new FPE(i) is computed by subtracting the offset from the old FPE. In other words, the offset is used as a bias and is subtracted from the FPE(i) in order to increase the FPE(i)'s accuracy.

At flowchart block 1737, the offset is compared to a preselected threshold. In the preferred embodiment, each vector component has a corresponding threshold. If all the vector components are not less than their corresponding preselected thresholds, then the flowchart 1700A starts again at flowchart block 1721, as indicated by a feedback arrow 1739. In this case, the positive integer i is increased by one to indicate another iteration and a different FPE(i). The present invention will operate in a cyclical, or loop-like, manner until the preselected threshold is achieved or surpassed.

When the offset finally achieves the preselected threshold, then the FPE is assumed to be the current state of FPE(i), as shown in flowchart block 1743. Hence, the base correlator bias technique provides for greater accuracy of the FPE.

G. Satellite Position Predictor

The present invention includes a method by which the future positions of the GPS satellites 132-170 can be predicted with respect to a known absolute position of the base station 188 and/or the vehicle 102. The future positions are based upon estimated pseudoranges calculated by the GPS processor 710 at the host processing system 188 and/ or the VPS 1000. Moreover, the computations can be performed at the base station 188 and/or the vehicle 102 and transferred anywhere, if necessary.

By predicting the future positions of the GPS satellites 132-170, optimum satellite constellations for the vehicle 102 can be determined well in advance. Thus, the present invention can provide for the prediction of satellite availability and unavailability in a systematic manner. It further allows for future planning related to the operation, service, and maintenance of the vehicle 102.

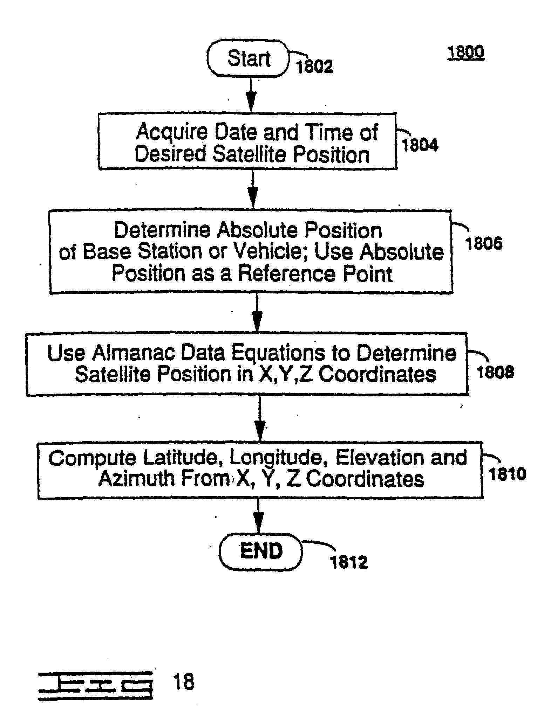

With reference to Figure 18, a flowchart 1800 illustrates the satellite position predictor method of the present invention. At a flowchart block 1804, for a particular GPS satellite, a future date and time is obtained or selected for any of a number of reasons eluded to above.

After a future date and time is acquired, the position of the base station 188 and/or the vehicle 102 is determined, as shown at a flowchart block 1806. In the preferred embodiment, the base station 188 is used as the reference point. The position of the base station 188 could be the base known position or the base position estimate (both discussed in relation to the base residuals technique). In the preferred embodiment, the base known position is utilized and will be referred to hereinafter.

As shown at a flowchart block 1808, the almanac data is then consulted. As discussed previously in this document, the almanac data for the NAVSTAR GPS is in the form of almanac equations. By inputting into the almanac equations a satellite's identity, the future date and time, and the base known position, the future position of any satellite can be determined.

When the future position of a satellite relative to the base station 188 is determined using the almanac equations, the future position is in orthogonal XYZ coordinates, as shown at a flowchart block 1808. Finally, in the preferred embodiment at a flowchart block 1810, the latitude, longitude, elevation and azimuth of the satellite are computed from the XYZ coordinates and the position of the base station 188.

From the computation of the future positions of satellites, optimal satellite constellations can be determined. Optimal satellite constellations determined using the base station 188 as the reference point can be imputed to the vehicle 102 if close to the base station 188.

H. Weighted Path History

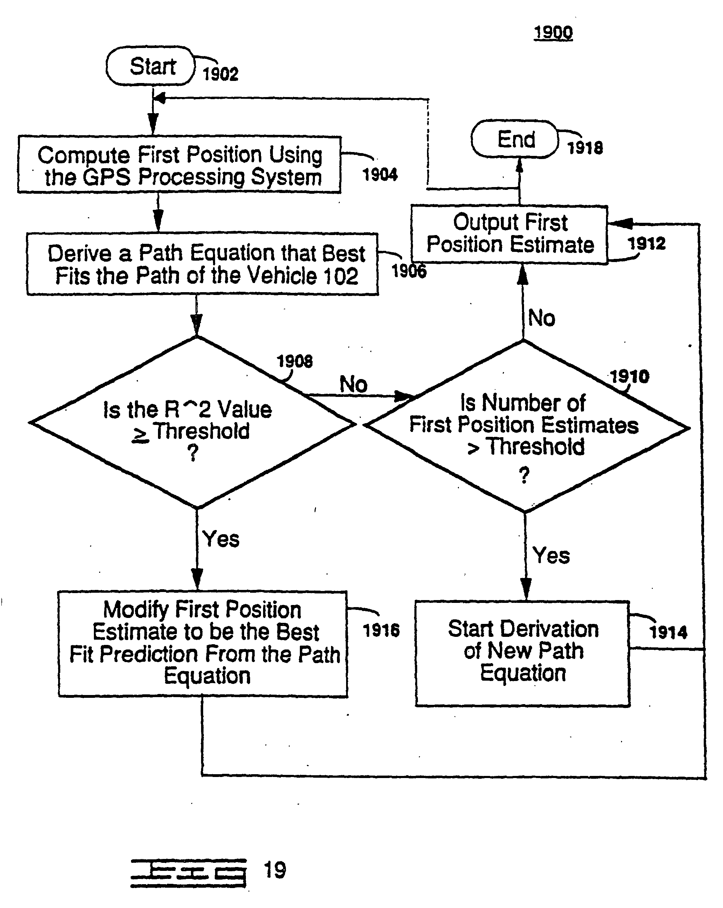

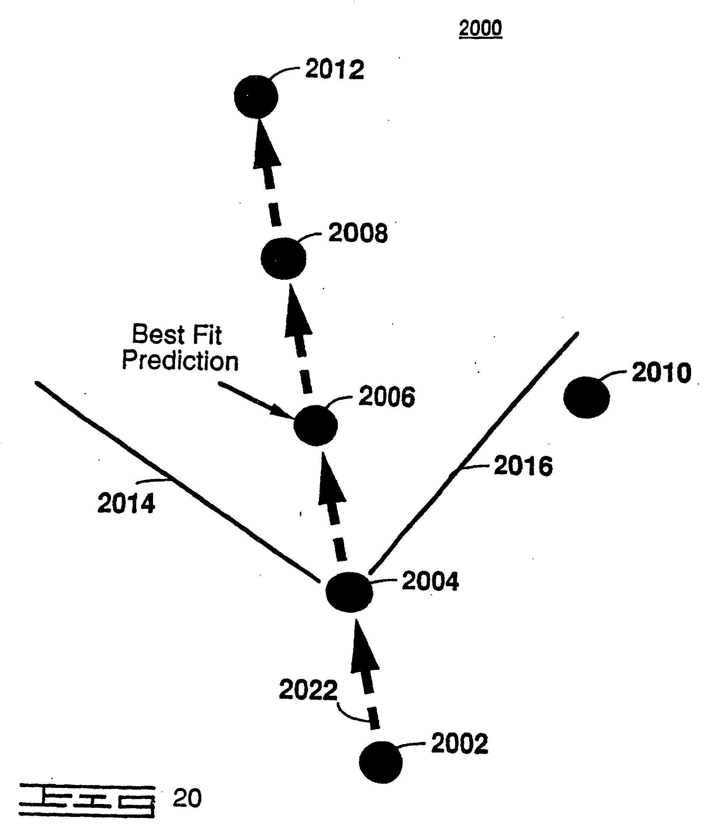

The weighted path history technique of the present invention improves the accuracy of first position estimates of the vehicle 102 which are derived from the GPS processing system 700. It should be noted that the weighted path history technique could be implemented in an identical fashion as is described below to improve the accuracy of third position estimates derived by the VPS 1000. The weighted path history technique is depicted in Figures 19 and 20.

Essentially, the weighted path history technique uses previous first position estimates to derive a vehicle path model for testing the validity of future first position estimates. Use of the weighted path history technique results in a reduction to wandering of first position estimates and in enhanced immunities to spurious position computations. The term "wandering" in the context of this document means the tendency of the GPS processing system 700 to estimate erroneous vehicle positions that deviate from the actual path of the vehicle 102.

With reference to Figure 19, the weighted path history flowchart begins at flowchart block 1902. A first position estimate of the vehicle 102 is computed and recorded by the GPS processing system 700, as indicated in a flowchart block 1904. First position estimates are recorded over time. As is shown in Figure 20, first position estimates 2002, 2004, 2006, 2008, 2010, and 2012 of vehicle 102 are plotted on a diagram 2000 to ultimately derive a vehicle path 2022.

At a flowchart block 1906, the first position estimate is used to manipulate/derive a path equation that best fits the path of the vehicle 102. In other words, first position estimates are accumulated over time to derive an accurate "path equation." In the preferred embodiment, the path equation is a second degree (parabolic) equation. However, it should be noted that a third degree equation (having a mathematical inflection) is envisioned for winding vehicle paths and vehicle turns. Furthermore, an embodiment of the present invention could utilize combinations of any types of equations to map an infinite number of different vehicle paths.

At a flowchart block 1908, the statistical $R^2$ value in relation to the path equation and the first position estimate is computed and compared to a threshold numerical value. In the preferred embodiment, the threshold has been set to 0.98. The statistical $R^2$ value was discussed in detail previously in this document. In the context of the weighted path history technique of Figure 19, the $R^2$ value reflects the number of first position estimates that have been taken thus far, and therefore, it reflects the statistical accuracy of a future prediction from the path equation.

If the $R^2$ value is not greater than or equal to 0.98, then a test is performed at a flowchart block 1910 to determine whether a new path equation should be derived. In other words, a determination is made as to whether the currently collected first position estimates as well as the path equation are inaccurate, and therefore, should not be relied upon.

In the preferred embodiment, the number of first position estimates is counted and compared to a threshold of 20. Any threshold number could be preselected. If more than 20 first position estimates have been computed, then the flowchart moves to block 1914. Flowchart block 1914 indicates that a new path equation will be started during the next iteration of the flowchart 1900 at flowchart block 1906.

If less than or equal to 20 first position estimates have been calculated and collected, then the present path equation of flowchart block 1906 is still utilized and will be considered again during the next iteration of flowchart 1900. Moreover, the first position estimate is outputted from the GPS processing system 700, as shown at a flowchart block 1912.

Referring back to the flowchart block 1908, if the $R^2$ value of the path equation is greater than or equal to 0.98, then as shown in a flowchart block 1916, the first position estimate is modified to be the best fit prediction from the present path equation. Finally, the first position estimate is outputted by the GPS processing system 700, as shown by flowchart block 1912.

Figure 20 illustrates graphically the scenario at issue. The first position estimate 2010 of the vehicle 102 is radically different from the best fit prediction 2006 of the path equation. Therefore, the first position estimate 2010 is replaced by best fit prediction 2006, so long as the $R^2$ value of the path equation is greater than or equal to preselected threshold and so long as enough position estimates have been sampled.

Lines 2014 and 2016 illustrate the scope of acceptability with respect to the first position estimates. These lines 2014 and 2016 represent the physical manifestation of the $R^2$ value. Thus, the best fit prediction 2006 is outputted from the GPS processing system 700 to the navigation system 1022, instead of the first position estimate 2010 which is outside the span of line 2016.

Figure 20A shows a high level flowchart 2000A of a method for implementing the weighted path history technique as disclosed in Figures 19 and 20. The method as shown accommodates for a vehicle travel path having sharp corners, intersections, and/or any drastic nonlinear path. The method increases the accuracy of the first position estimate (FPE) of the vehicle 102 outputted by the GPS processing system 700.

The preferred embodiment implements the novel methodology of Figure 20A via software. The software can be situated in the GPS processor 710 of the GPS processing system 700 at the vehicle 102 and/or at the base station 188.

The flowchart 2000A begins at flowchart block 2001 and ends at flowchart block 2019. As shown in flowchart block 2005, the GPS processing system 700 as disclosed in Figures 7 and 8 computes the first position estimate using any of the bias techniques discussed previously in this document. In the preferred embodiment, the bias techniques subject to the method of Figure 20A include, for example, the original bias technique of Figure 15 and the parabolic bias technique of Figure 16.

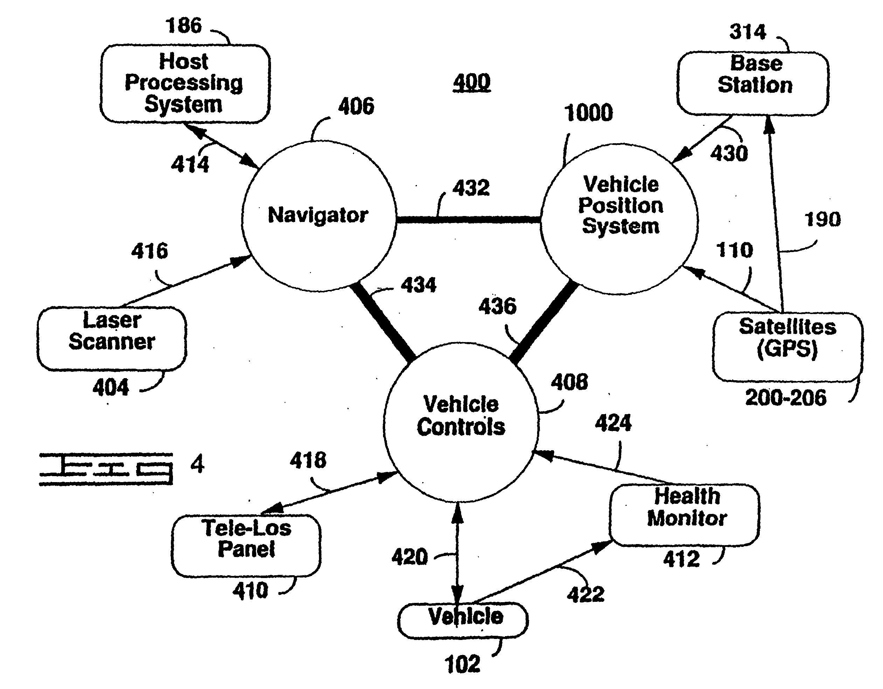

At flowchart block 2009, a decision is made as to whether the vehicle 102 is approaching or is in the midst of a sharp corner, intersection, or other irregular path. The information needed to answer this question can be supplied to the GPS processor 710 from the navigator 406 of Figure 4. If the answer to this question is in the negative, then the flowchart 2000A proceeds as indicated by an arrow 2013. In the alternative, that is, if the answer to this question is in the affirmative, then the flowchart 2000A proceeds as indicated by an arrow 2021. Both of these alternative avenues are discussed in detail below.

When the vehicle 102 is not approaching or is not in the midst of a drastic nonlinear path, then the flowchart 2000A commences with flowchart block 2015. At flowchart block 2015, the GPS processor 710 outputs the first position estimate to the VPS 1000, which first position estimate was derived using one or more bias techniques. Recall that the VPS 1000, which is disclosed in Figures 10 and 11, calculates the third position estimate of the vehicle 102 using, in part, the first position estimate sent to it from the GPS processing system 700.

When the vehicle 102 is approaching a drastic nonlinear path, then the flowchart 2000A commences with flowchart block 2023. At flowchart block 2023, the bias techniques are temporarily abandoned, until a more linear path ultimately ensues. The GPS processor 710 computes the first position estimate of the vehicle 102 without regard to the bias techniques, as indicated in flowchart block 2027.

The flowchart next proceeds to flowchart block 2031. A determination is made as to whether the vehicle 102 is approaching or is in the midst of a relatively linear path. If so, then the flowchart 2000A returns to flowchart block 2005, as shown by a feedback arrow 2033. At the flowchart block 2005, any previously-terminated bias techniques are again instituted.

In the case of the parabolic bias technique of Figure 16, new best-fit parabolic models are constructed for each of the observed GPS satellites. Recall that actual pseudoranges are determined for each of the observed GPS satellites over a period of time to construct a parabolic model for each GPS satellite. The parabolic models are not utilized until the accuracy of the models is greater than a certain threshold. In the present invention, the parabolic models are not utilized until a statistical $R^2$ value is greater than 0.99.

Alternatively, if the vehicle 102 is not approaching or is not in the midst of a relatively linear path, then the flowchart 2000A moves to flowchart block 2015 discussed previously. However, it should be noted that the first position estimate transmitted to the VPS 1000 at this point was derived without regard to any bias techniques.

IV. Navigation System

A. Overview

In considering implementation of an autonomous navigation system, there are some basic questions which any autonomous system must be able to answer in order to successfully navigate from point A to point B. The first question is "where are we (the vehicle) now?" This first question is answered by the positioning system portion of the present invention .

The next or second question is "where do we go and how do we get there?" This second question falls within the domain of the navigation system portion of the present invention .

A further (third) question, really a refinement of the second one, is "how do we actually physically move the vehicle, for example, what actuators are involved (steering, speed, braking, and so on), to get there?" This is in the domain of the vehicle controls subsystem of the navigation system.

As has been discussed implicitly above, autonomous navigation, of a mining vehicle as an example, may provide certain significant advantages over conventional navigation. Among them is an increased productivity from round the clock, 24 hr. operation of the vehicles. The problems presented by dangerous work environments, or work environments where visibility is low, are particularly well suited to solution by an autonomous system.

There are, for instance, some mining sites where visibility is so poor that work is not possible 200 days of the year. There are other areas which may be hazardous to human life because of being contaminated by industrial or nuclear pollution. An area may be so remote or desolate that requiring humans to work there may pose severe hardships or be impractical. The application of the present invention could foreseeably include extraterrestrial operations, for example, mining on the Moon, provided that the necessary GPS satellites were put in Moon orbit.

In a typical application of the present invention, as shown in Figure 3, with regard to the navigation of a mining vehicle at a mining site, there are three basic work areas: the load site, the haul segment, and the dump site. At the load site, a hauling vehicle may be loaded with ore in any number of ways, by human operated shovels for instance, controlled either directly or by remote control, or by autonomous shovels. The hauling vehicle then must traverse an area called the haul segment which may be only a few hundred meters or may be several km's. At the end of the haul segment is the dump site, where the ore is dumped out of the hauling vehicle to be crushed, or otherwise refined, for instance.

Autonomous positioning and navigation may be used to control the hauling vehicle along the haul segment. Autonomously navigated refuelling and maintenance vehicles are also envisioned.

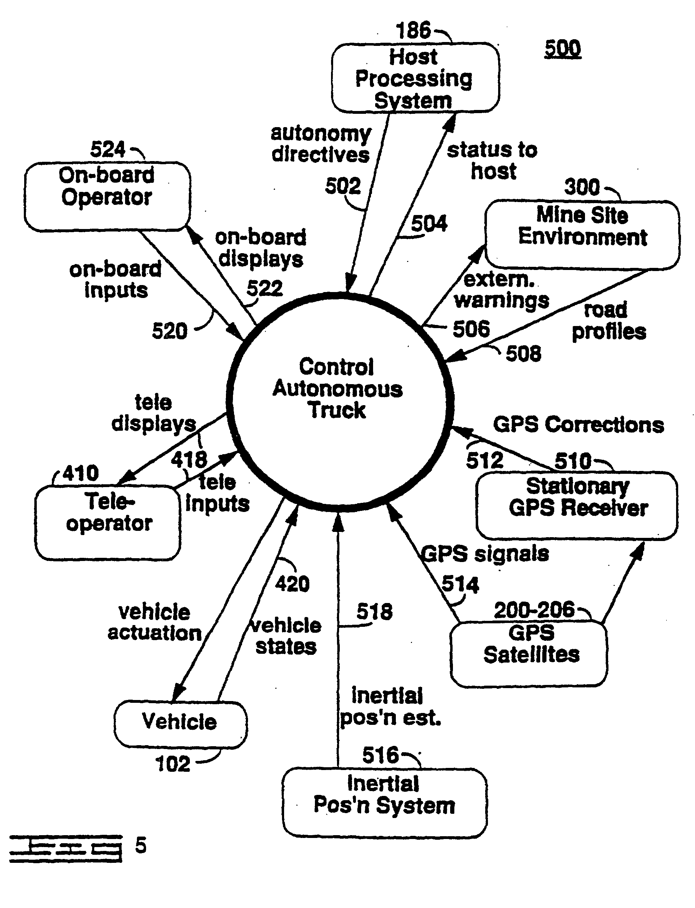

Referring now to Figures 4 and 5, navigation of the AMT (Autonomous Mining Truck) encompasses several systems, apparatus and/or functions. The VPS 1000 subsystem of the overall AMT system as described above, outputs position data that indicates where the vehicle is located, including, for example, a North and an East position.

Referring now to Figures 4 and 5, position data output from the VPS is received by a navigator 406. The navigator determines where the vehicle wants to go (from route data) and how to get there, and in turn outputs data composed of steer and speed commands to a vehicle controls functional block 408 to move the vehicle.

The vehicle controls block then outputs low level commands to the various vehicle 102 systems, such as the governor, brakes and transmission. As the vehicle is moving towards its destination, the vehicle controls block and the VPS receive feed-back information from the vehicle indicative of, for example, any fault conditions in the vehicle's systems, current speed, and so on.

Navigation also must include an obstacle handling (detection and avoidance) capability to deal with the unexpected. A scanning system 404 detects obstacles in the vehicle's projected trajectory, as well as obstacles which may be approaching from the sides and informs the navigator of these.

The navigator may be required to then decide if action is required to avoid the obstacle. If action is required, the navigator decides how to avoid the obstacle. And after avoiding the obstacle, the navigator decides how to get the vehicle back onto a path towards its destination.

Conceptually, the navigation aspects can be arbitrarily divided into the following major functions:

route planning/path generation;
path tracking; and
obstacle handling.

B. Route Planning/Path Generation

Autonomous vehicle navigation conceptually consists of two sub problems, path generation and path tracking, which are solved separately.

Path generation uses intermediate goals from a high level planner to generate a detailed path for the vehicle 102 to follow. There is a distinct trade-off between simplicity of representation of such plans and the ease with which they can be executed. For example, a simple scheme is to decompose a path into straight lines and circular curves. However, such paths cannot be tracked precisely simply because of discontinuities in curvature at transition points of segments that require instantaneous accelerations.

Following path generation, path tracking takes, as input, the detailed path generated and controls the vehicle 102 to follow the path as precisely as possible. It is not enough to simply follow a pre-made list of steering commands because failure to achieve the required steering motions exactly, results in steady state offset errors. The errors accumulate in the long run. Global position feedback 432 may be used to compensate for less than ideal actuators. Methods have been developed for the present invention which deviate from traditional vehicle control schemes in which a time history of position (a trajectory) is implicit in the plan specified to the vehicle 102.

These methods are appropriately labelled "path" tracking in that the steering motion is time decoupled; that is, steering motions are directly related to the geometric nature of the specified path, making speed of the vehicle 102 an independent parameter.

Referring now to Figure 3, an autonomous vehicle 102 may be required to traverse a haul segment 320 to a dump site 322, and after dumping its load, traverse another haul segment to a service shop 324, under the direction of the host processing system 186. The host processing system 186 determines the vehicle 102's destinations, which is called "cycle planning." The determination of which routes to take to get to a desired destination must be accomplished by "route planning."

"Route planning" is the determination of which path segments to take to get to a desired destination. In general, a route can be thought of as a high-level abstraction or representation of a set of points between two defined locations. Just as one can say to a human driver "take route 95 south from Lobster, Maine to Miami, Florida," and the driver will translate the instruction into a series of operations (which may include starting the vehicle 102, releasing the brake 4406, engaging the transmission 4610, accelerating to the posted speed limit, turning the steering wheel 4910, avoiding obstacles 4002, and so on), the autonomous navigation system of the present invention performs similarly. As used in the system of the present invention, a "route" is a sequence of contiguous "segments" between the start and end of a trip.

An autonomous vehicle 102 may begin at any position in the sequence and traverse the route in either direction. A "segment" is the "path" between "nodes." A "node" is a "posture" on a path which requires a decision. Examples of nodes are load sites 3318, dump sites 322, and intersections 326.

There are various types of segments. For instance, there are linear and circular segments. Linear segments (lines) are defined by two nodes. Circular segments (arcs) are defined by three nodes.

"Postures" are used to model parts of a route, paths and nodes for instance. Postures may consist of position, heading, curvature, maximum velocity, and other information for a given point on the path.

A "path" is a sequence of contiguous postures.

A segment is, therefore, a sequence of contiguous postures between nodes. All segments have a speed associated with them, which specifies the maximum speed with which the vehicle 102 is to traverse that segment. The navigator 406 can command slower speeds, if necessary, to meet other requirements.

Determining which postures are required to define a path segment by analytical, experimental or a combination of both, is called "path planning".

To bring the discussion full circle, a sequence of contiguous routes, as mentioned above, is referred to as a "cycle," and a vehicle 102's work goals determine its "cycle."

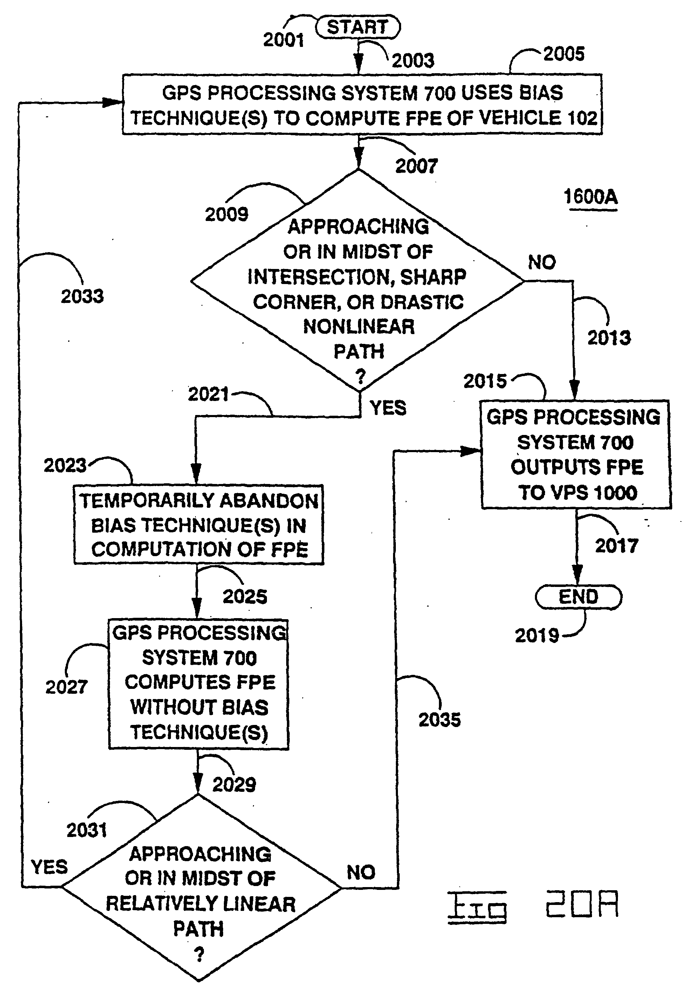

Therefore, to define a route one must first define the nodes and segments. Next, the nodes and segments must be ordered. Finally the routes must be defined by specifying where in the ordered set a route is to begin, and in which direction the ordered set is to be traversed (See Figure 21 which illustrates these concepts ).

## C. PATH TRACKING

Path tracking or following is a critical aspect of vehicle navigation.

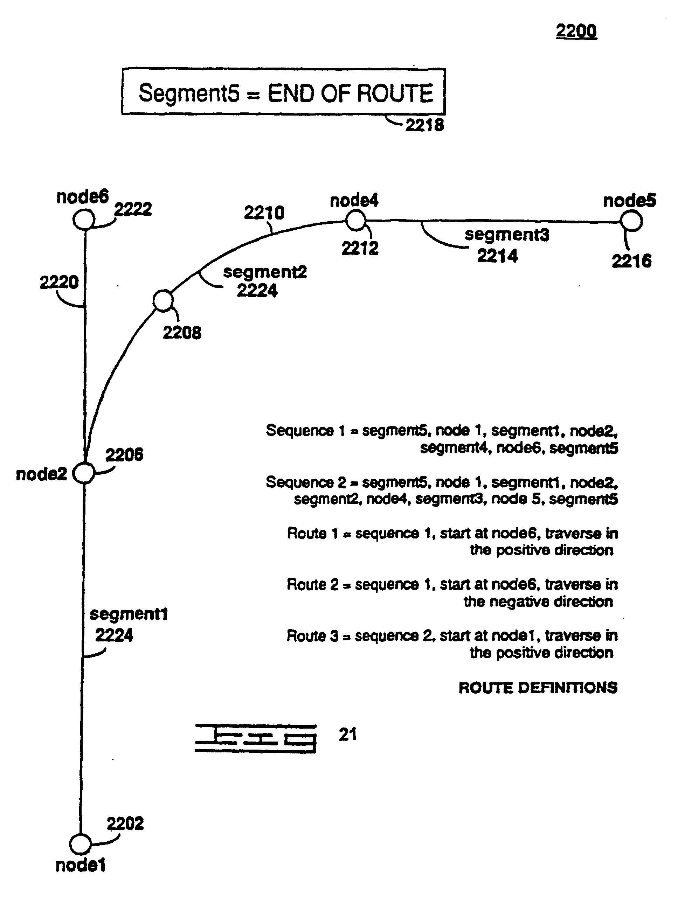

The technique of the example system uses position based navigation (rather than vision based navigation used in conventional navigation systems) to ensure that the correct autonomous vehicle path 3312 is followed. The example system is also innovative in that it provides for separate control of steering angle 3116 and vehicle speed 3118. Figure 22 graphically illustrates a path tracking system 3102.

For an autonomous vehicle 102 to track specified paths, it is necessary to generate referenced inputs for the vehicle servo-controllers. Thus, path tracking can be considered as a problem of obtaining a referenced steering angle and a reference speed for the next time interval in order to get back to the referenced path ahead from the current deviated position.

In general terms, path tracking is determining the autonomous vehicle commands (speed, steer angle) required to follow a given path. Given a pre-specified steering angle, driven wheel velocity values and error components, the command steering and driving inputs are computed in the present invention.

## D. OBSTACLE HANDLING

### 1. INTRODUCTION

Obstacle handling involves at least three major functions: detection of obstacles 4002, avoidance of obstacles 4002, and returning to path 3312. The returning to path function is similar to path generation and tracking, as described above.

In addition to path tracking (following), successful navigation of vehicle 102 requires that vehicle 102 be able to detect obstacles 4002 in its path, thus allowing the vehicle to stop or otherwise avoid such an obstacle before a collision occurs.

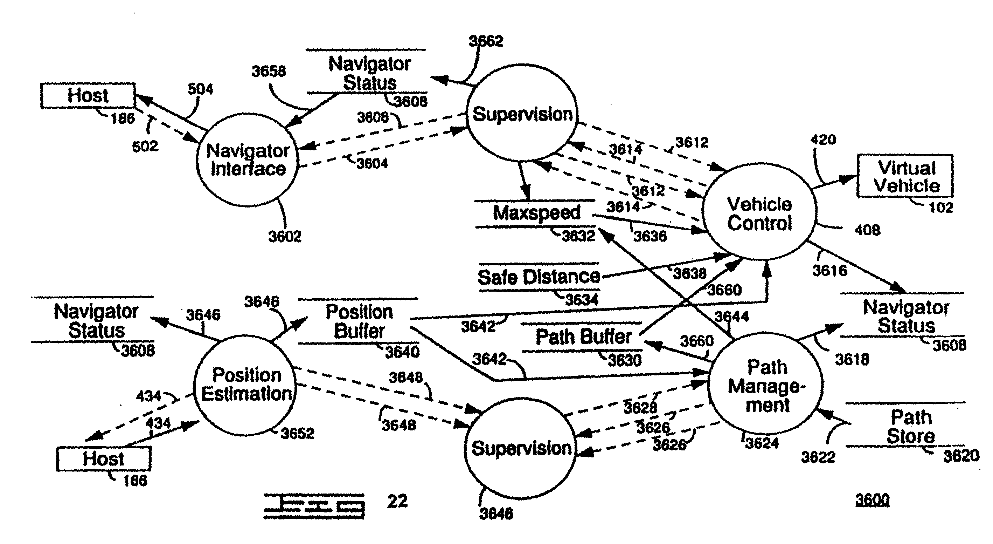

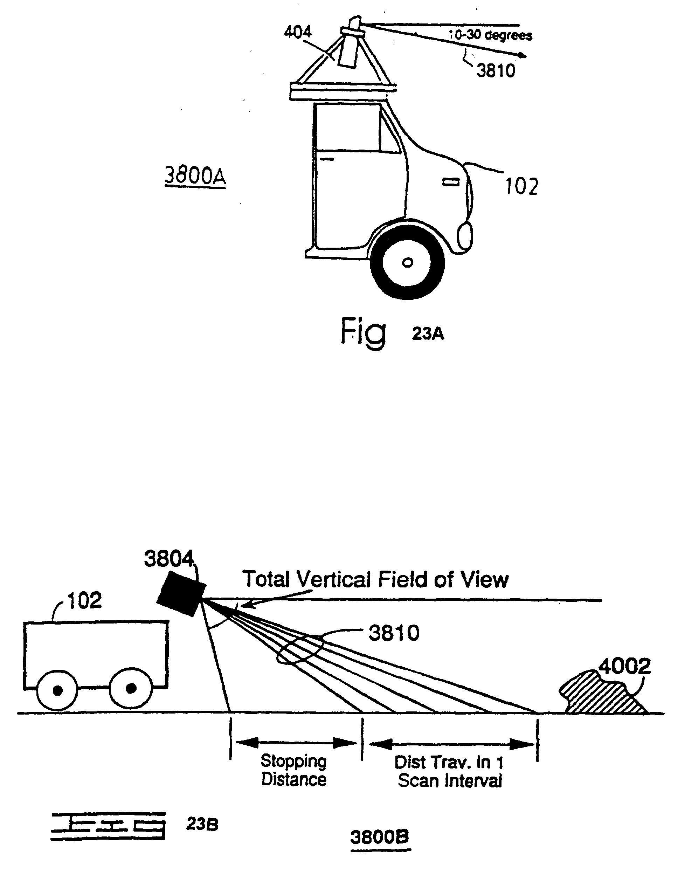

A single line infra-red laser scanner 404 (See Figure 23 may be used in a configuration where the scan is horizontal (not shown). The scan line 3810 does not contact the ground, so any discontinuities in the range data can be attributed to objects 4002 in the environment.

Since a reference path 3312 is available and the vehicle position is known relative to the reference path, only the range data and a region bounding the reference path 3312 is processed for threatening objects 4002. Objects outside of this region, or boundary zone, are ignored. The width of the boundary zone (not shown) is equal to the vehicle width plus some selected safety buffer to allow for tracking and positioning errors. This method is limited in its usefulness and is referred to as "clearance checking."

### 2. DETECTION OF OBSTACLES

In the simplest case, the laser 404 may be used in a single line scan mode with successive range measurements being made at regular angular intervals as the laser scans over the field of view. Again for simplicity, these scans can commence at regular time intervals. The term "clearance checking" has been used to describe this method. In this version the method has been limited to processing only two dimensional data.

This type of obstacle method is limited to checking to see if the path 3312 is clear using a single line scan mode with successive range measurements being made at regular angular intervals as the scanner 404 scans over the field of view. It does not include any methods to establish the existence of any obstacle 4002 or to create a path around it if the path is not clear. This type of method is not deemed to be a particularly useful obstacle detection method, except in very rigidly controlled environments, such as on a factory floor.

### 3. AVOIDANCE OF OBSTACLES

Once an obstacle is detected 4002 in the path of the vehicle 102 (See Figure 24), the vehicle must then avoid a collision with the object. Certain assumptions are made concerning the obstacle avoidance problem:

1. The obstacle environment is populated with obstacles 4002 that can be represented by convex-polygons or convex lines;
2. The navigation methods only have access to the local environment information in the form of a local map representing all of the visible faces of the obstacle from the position of the vehicle 102, which can be obtained from unprocessed laser range data or from data processed through blob-extraction;
3. The vehicle 102 is a conventionally steered type which has constraints on its speed and acceleration and constraints on its steering angle and the rate of change in the steering angle.

To deal with the obstacle avoidance problem, it may be divided into two sub-problems.

First, to decide if any obstacles are in the way, and if so, which side should the vehicle pass on. Then select a sub-goal 4006, which will lead the vehicle 102 around the obstacle 4002, leading towards a higher level goal 4008, which is to get back on the desired path.

Second, once a sub-goal 4006 is selected, make a steering decision which drives the vehicle 102 towards the sub-goal 4006, while steering clear of the obstacle 4002. A sub-goal selection method and a steering decision method solve these two sub-problems.

Once the control constraints and the desired control vector are computed, the control vectors can be determined using optimization techniques well known in the art.

## 4. RETURN TO PATH

The example system includes a method, as shown diagrammatically in Figure 24 , whereby a safe path around a detected object 4002 will be plotted and navigated so that the vehicle 102 will reacquire the reference path after avoiding the object 4002.

## 5. SCANNER SYSTEM

Referring to Figure 23 , the present invention also includes a laser scanner system 404. The scanner 404 is used to find obstructions 4002 (See Figure 24) that randomly crop up in the vehicle 102 path, as previously discussed.

Sources of such obstructions 4002 may be varied and numerous depending on the particular work site. They may include fallen trees and branches, boulders, moving and parked vehicles, and people.

The scanner 404 gives the autonomous vehicle 102 the ability to detect and deal with the external world as conditions require.

**Claims**

1. A computer-based system for autonomously navigating a vehicle (102) along a predetermined path, the system comprising:

   first means (1000) for determining a location of the vehicle (102), the first means including:

   a first positioning system (700) adapted to provide a first position estimate (716) of the vehicle (102) based on first signals (110) from a terrestrial position determinating system (200-206, 624);
   a second positioning system (900) adapted to provide a second position estimate (908, 910) of the vehicle (102) based on second signals (908, 910) obtained from an inertial reference unit (904) mounted on the vehicle (102) and a vehicle odometer (902); and
   a processing system (1002, 1004, 1020) adapted to compute a third position estimate of the vehicle (102) from the first position estimate (716) and the second position estimate (908, 910); and
   second means (5306) for causing the vehicle (102) to track the predetermined path; **characterised in that** the system further comprises:

   third means (4150) for causing the vehicle (102) to detect and avoid obstacles while tracking the predetermined path; and that
   the processing system comprises a weighted combiner, which is employed in the computation of the third position estimate of the vehicle.

2. A system according to claim 1, wherein the terrestrial position determinating system (200-206, 624) has at least one source for transmitting the first signals (110), the at least one source comprised of any one of one or more pseudolites (624), a global positioning system (200-206) having at least one orbiting satellite (200-206), and both the global positioning system (200-206) and the one or more pseudolites (624).

3. A system according to claim 1, wherein the processing system (1002,1004,1020) comprises:

an I/O processor (1002) coupled to the first positioning system (700) and the second positioning system (900), the I/O processor (1002) adapted to receive the first position estimate (716) and the second position estimate (908, 910) respectively;
a main processor (1004) coupled to the I/O processor (1002), the main processor (1004) for computing the third position estimate from the first position estimate (716) and the second position estimate (908, 910) comprises software including a second Kalman filter (1202) for filtering data from the inertial reference unit (904); and
a communications interface processor (1020) coupled to the main processor (1004), the communications interface processor (1020) for distributing the third position estimate.

4. A system according to claim 2, wherein the first positioning system (700) further comprises a reference receiver (316) at a known location situated near the vehicle (102), the reference receiver (316) for receiving the first signals (110) from the terrestrial position determinating system (200-206, 624), and the reference receiver (316) for computing a differential bias.

5. A system according to claim 2, wherein the first positioning system (700) comprises:

an antenna (702) for receiving the first signals (110);
a preamplifier (704) coupled to the antenna (702), the preamplifier (704) for amplifying the first signals (110);
a first receiver (706) coupled to the preamplifier, the first receiver (706) for tracking the sources (200-206, 624) currently observed and for deriving actual pseudoranges ($R_0$, $R_2$, $R_4$, $R_6$) of the sources (200-206, 624);
an intercommunications processor (708) coupled to the first receiver (706), the intercommunications processor (708) for receiving the actual pseudoranges from the first receiver (706) and distributing the actual pseudoranges and status information; and
a GPS processor (710) coupled to the intercommunications processor (708), the GPS processor (710) for computing the first position estimate (716) from the actual pseudoranges.

6. A system according to claim 4, wherein the differential bias comprises an original bias computed by subtracting estimated pseudoranges ($R_0$, $R_2$, $R_4$, $R_6$) and base clock biases from actual pseudoranges (RO, R2, R4, R6).

7. A system according to claim 4, wherein the differential bias comprises a parabolic bias computed by using a parabolic model constructed over a time period from prior actual pseudoranges.

8. A system according to claim 4, wherein the differential bias is computed by deriving a difference between an estimated location of the reference receiver (316) and the known location of the reference receiver (316), the estimated location derived from a constellation of the sources (200-206, 624), the constellation used by the first positioning system (700) of the vehicle (102) to derive the first position estimate (716) of the vehicle (102).

9. A system according to claim 5, wherein the GPS processor (710) comprises a first Kalman filter (802) for filtering the first signals (110).

10. A system according to claim 3, wherein the weighted combiner (1204) is coupled to the output of the second Kalman filter (802).

11. A system according to claim 9, wherein the first Kalman filter (802) modifies its acceptable data perturbations depending on the velocity of the vehicle (102).

12. A system according to claim 9, wherein the processing system (1002, 1004, 1020) adapted to compute the third position estimate continuously communicates vehicle velocity data (1018) to the first Kalman filter (802) of the first positioning system (700), the first Kalman filter (802) using the vehicle velocity data to thereby enhance the accuracy of the first position estimate (716) of the first positioning system (700).

13. A computer-based method for autonomously navigating a vehicle (102) along a predetermined path, the method comprising the steps of:

determining a location of the vehicle (102) using a terrestrial position determining system (200-206, 624), an inertial reference unit (904), and a vehicle odometer (902);

causing (5306) the vehicle (102) to track the predetermined path based upon the location; and

causing (4150) the vehicle (102) to detect and avoid obstacles while tracking the predetermined path **characterised in that**:

the location is determined by producing, with a weighted combiner, a location based upon a position estimate from the terrestrial position determining system (200-206,624) and a position estimate from the inertial reference unit (904).

**14.** A method according to claim 13, wherein the location determining step comprises the steps of:

deriving a first position estimate (716) of the vehicle (102) based on first signals (110) from the terrestrial position determinating system (200-206, 624);

deriving a second position estimate (908, 910) of the vehicle (102) based on second signals (908, 910) obtained from the inertial reference unit (904) mounted on the vehicle (102) and the vehicle odometer (902);

deriving the location of the vehicle (102) from the first position estimate (716) and the second position estimate (908, 910).

**15.** A method according to claim 13, wherein the location determining step comprises the steps of:

receiving signals from the terrestrial position determining system (200-206, 624) at a reference position;

processing the signals at the reference position to determine a differential bias;

communicating the differential bias from the reference position to the vehicle; and

processing the differential bias at the vehicle to accurately determine the location.

**16.** A method according to claim 13, wherein the location determining step comprises the steps of:

anticipating (1304, 1306) the relative position of satellites (200-206) of the terrestrial position determining system with respect to the location based upon data in an almanac;

selecting (1312) a best constellation of the satellites (200-206) based on the geometry of the satellites (200-206) relative to the location; and

recognizing (1314) only signals from the best constellation.

**17.** A method according to claim 14, wherein the first position estimate derivation step comprises the steps of:

incorporating (1906) previous first position estimates into a best fit algorithm;

monitoring (1908) the best fit algorithm until the statistical R squared value of the best fit algorithm is greater than or equal to a preselected threshold 0.98; and

extrapolating (1916) the first position estimate from the best fit algorithm.

**18.** A method according to claim 14, wherein the first position estimate derivation step comprises the steps of:

deriving (2104) actual pseudoranges of satellites (200-206) of the terrestrial position determining system using almanac data;

computing (2104) estimated pseudoranges of the satellites (200-206) using ephemeris data;

comparing (2106) the differences between the actual pseudoranges and the estimated pseudoranges against a preselected threshold;

adopting (2108) the estimated pseudoranges if the differences are greater than the preselected threshold; otherwise, adopting (2110) the actual pseudoranges and

using the adopted pseudoranges to compute the first position estimate.

**19.** A method according to claim 14, further comprising the steps of:

transmitting the second signals (908, 910) (1010) to a second Kalman filter (1202);

outputting the second position estimate from the second Kalman filter (1202) to the weighted combiner (1204);

outputting from the weighted combiner (1204) a vehicle velocity (1018) of the vehicle (102) to a first Kalman filter (802) of the first positioning system; and

adapting the first Kalman filter (802) pursuant to the vehicle velocity (1018) to increase the accuracy of the first position estimate (1006) outputted from the first Kalman filter (802).

**20.** A method according to claim 19, wherein the weighted combiner output step further comprises the step of outputting weighted data (1206) to the second Kalman filter (1202) to increase the accuracy of the second position estimate.

**21.** A method according to claim 19, wherein the weighted combiner output step further comprises the step of outputting weighted data (1016) to a vehicle navigator (406, 1022).

**22.** A method according to claim 15, wherein the signal processing step comprises the steps of:

obtaining (1706) the known position of the reference position (316);
computing (1706) reference antenna pseudoranges ($R_3$, $R_2$, $R_4$, $R_6$) for sources (200-206, 624) of the terrestrial position determining system in view of the reference position (316);
deriving (1708) an estimated position of the reference position (316) using the reference antenna pseudoranges ($R_0$, $R_2$, $R_4$, $R_6$); and
comparing (1710) the estimated position with the exact position to derive the differential bias.

**23.** A method according to claim 15, wherein the signal processing step includes the steps of:

computing actual pseudoranges ($R_3$, $R_2$, $R_4$, $R_6$) for sources (200-206, 624) of the terrestrial positioning determining system in view of a reference antenna (316) at the reference position until a time when a parabolic model can be constructed based on the actual pseudoranges ($R_0$, $R_2$, $R_4$, $R_6$) with a preselected statistical $R_2$ value;
extrapolating estimated pseudoranges ($R_0$, $R_2$, $R_4$, $R_6$) of the sources (200-206, 624) at future times from the parabolic models; and
computing differential biases by comparing the actual pseudoranges ($R_0$, $R_2$, $R_4$, $R_6$) and the estimated pseudoranges ($R_3$, $R_2$, $R_4$, $R_6$).

**Patentansprüche**

**1.** Computer basierendes System für ein autonomes Navigieren eines Fahrzeugs (102) entlang eines vorbestimmten Pfades, wobei das System folgendes aufweist:

erste Mittel (1000) für das Bestimmen eines Ortes des Fahrzeugs (102), wobei die ersten Mittel folgendes umfassen:

ein erstes Positioniersystem (700) geeignet für das Vorsehen einer ersten Positionsschätzung (716) des Fahrzeugs (102) basierend auf ersten Signalen (110) von einem terrestrischen Positionsbestimmungssystem (200-206, 624);
ein zweites Positioniersystem (900) geeignet für das Vorsehen einer zweiten Positionsschätzung (908, 910) des Fahrzeugs (102) basierend auf zweiten Signalen (908, 910), die erhalten werden von einer Inertial-Bezugseinheit (904), die am Fahrzeug (102) montiert ist, und von einem Fahrzeugtachometer (902); und
ein Verarbeitungssystem (1002, 1004, 1020) geeignet für das Berechnen einer dritten Positionsschätzung des Fahrzeugs (102) aus der ersten Positionsschätzung (716) und der zweiten Positionsschätzung (908, 910); und
zweite Mittel (5306), um zu veranlassen, dass das Fahrzeug (102) dem vorbestimmten Pfad folgt; **dadurch gekennzeichnet, dass** das System weiter folgendes aufweist:

dritte Mittel (4150), um zu bewirken, dass das Fahrzeug (102) Hindernisse detektiert und vermeidet während es dem vorbestimmten Pfad folgt; und dass
das Verarbeitungssystem einen gewichteten Kombinierer aufweist, der bei der Berechnung der dritten Positionsschätzung des Fahrzeugs eingesetzt wird.

**2.** System gemäß Anspruch 1, wobei das terrestrische Positionsbestimmungssystem (200-206, 624) zumindest eine Quelle für das Aussenden der ersten Signale (110) besitzt, wobei die zumindest eine Quelle irgendeines von einem oder mehreren der folgenden Systeme aufweist:

Pseudoliten (624), ein globales Positioniersystem (200-206) mit zumindest einem Umlaufsatelliten (200-206) oder beides, sowohl das globale Positioniersystem (200-206) und einen oder mehrere Pseudoliten (624).

3. System gemäß Anspruch 1, wobei das Verarbeitungssystem (1002, 1004, 1020) folgendes aufweist:

einen I/O-Prozessor bzw. Eingang-Ausgang-Prozessor (1002) gekoppelt mit dem ersten Positioniersystem (700) und dem zweiten Positioniersystem (900), wobei der I/O-Prozessor (1002) geeignet ist für den Empfang der ersten Positionsschätzung (716) bzw. der zweiten Positionsschätzung (908, 910);
einen Hauptprozessor (1004) gekoppelt mit dem I/O-Prozessor (1002), wobei der Hauptprozessor (1004) vorgesehen ist für das Berechnen der dritten Positionsschätzung aus der ersten Positionsschätzung (716) und der zweiten Positionsschätzung (908, 910), und Software aufweist, und zwar einschließlich eines zweiten Kalman-Filters (1202) für das Filtern von Daten von der Inertial-Bezugseinheit (904); und
einen Kommunikations-Schnittstellenprozessor (1020) gekoppelt mit dem Hauptprozessor (1004), wobei der Kommunikations-Schnittstellenprozessor (1020) vorgesehen ist für das Verteilen der dritten Positionsschätzung.

4. System gemäß Anspruch 2, wobei das erste Positioniersystem (700) weiter einen Referenzempfänger (316) an einem bekannten Ort nahe zum Fahrzeug (102) gelegen aufweist, wobei der Referenzempfänger (316) vorgesehen ist für das Empfangen der ersten Signale (110) von dem terrestrischen Positionsbestimmungsystem (200-206, 624), und wobei der Referenzempfänger (316) vorgesehen ist für das Berechnen eines Differential-Bias bzw. Differential-Vorwertes.

5. System gemäß Anspruch 2, wobei das erste Positioniersystem (700) folgendes aufweist:

eine Antenne (702) für das Empfangen der ersten Signale (110);
einen Vorverstärker (704) gekoppelt mit der Antenne (702), wobei der Vorverstärker (704) vorgesehen ist für das Verstärken der ersten Signale (110);
einen ersten Empfänger (706) gekoppelt mit dem Vorverstärker, wobei der erste Empfänger (706) vorgesehen ist für das Folgen von den Quellen (200-206, 624), die zum Zeitpunkt beobachtet werden, und für das Ableiten von Ist-Pseudobereichen ($R_0$, $R_2$, $R_4$, $R_6$) der Quellen (200-206, 624);
einen Zwischenkommunikations-Prozessor (708) gekoppelt mit dem ersten Empfänger (706), wobei der Zwischenkommunikations-Prozessor (708) vorgesehen ist für das Empfangen der Ist-Pseudobereiche bzw. Ist-Pseudoentfernungen von dem ersten Empfänger (706) und für das Verteilen der Ist-Pseudobereiche und von Statusinformation; und
einen GPS-Prozessor (710) gekoppelt mit dem Zwischenkommunikations-Prozessor (708), wobei der GPS-Prozessor (710) vorgesehen ist für das Berechnen der ersten Positionsschätzung (716) aus den Ist-Pseudobereichen.

6. System gemäß Anspruch 4, wobei der Differential-Bias einen ursprünglichen Bias bzw. ursprünglichen Vorwert aufweist, der durch Subtrahieren von geschätzten Pseudobereichen ($R_0$, $R_2$, $R_4$, $R_6$) und von Clock- bzw. Taktableitungen bzw. Clock-Biasen von den Ist-Pseudobereichen ($R_0$, $R_2$, $R_4$, $R_6$) berechnet wird.

7. System gemäß Anspruch 4, wobei der Differential-Bias einen parabolischen Bias aufweist, der durch Nutzung eines parabolischen Modells berechnet wird, das über eine Zeitdauer hinweg aus vorangegangenen Ist-Pseudobereichen aufgebaut ist.

8. System gemäß Anspruch 4, wobei der Differential-Bias berechnet wird durch Ableiten einer Differenz zwischen einem geschätzten Ort des Referenz-empfängers (316) und dem bekannten Ort des Referenzempfängers (316), wobei der geschätzte Ort abgeleitet wird aus einer Konstellation der Quellen (200-206, 624), wobei die Konstellation genutzt wird durch das erste Positioniersystem (700) des Fahrzeugs (102) für das Ableiten der ersten Positionsschätzung (716) des Fahrzeugs (102).

9. System gemäß Anspruch 5, wobei der GPS-Prozessor (710) einen ersten Kalman-Filter (802) für das Filtern der ersten Signale (110) aufweist.

10. System gemäß Anspruch 3, wobei der gewichtete Kombinierer (1204) gekoppelt ist mit dem Ausgang des zweiten Kalman-Filters (802).

**11.** System gemäß Anspruch 9, wobei der erste Kalman-Filter (802) seine annehmbaren Datenstörungen modifiziert in Abhängigkeit von der Geschwindigkeit des Fahrzeugs (102).

**12.** System gemäß Anspruch 9, wobei das Verarbeitungssystem (1002, 1004, 1020), das geeignet ist für das Berechnen der dritten Positionsschätzung, kontinuierlich Fahrzeuggeschwindigkeits-Daten (1018) an den ersten Kalman-Filter (802) des ersten Positoniersystem (700) kommuniziert, wobei der erste Kalman-Filter (802) die Fahrzeuggeschwindigkeits-Daten nutzt, um somit die Genauigkeit der ersten Positionsschätzung (716) des ersten Positioniersystems (700) zu verbessern.

**13.** Computer basierendes Verfahren für das autonome bzw. selbständige Navigieren eines Fahrzeugs (102) entlang eines vorbestimmten Pfades, wobei das Verfahren die folgenden Schritte aufweist:

Bestimmen eines Ortes des Fahrzeugs (102) unter Nutzung eines terrestrischen Positionsbestimmungssystems (200-206, 624), einer Inertial-Bezugseinheit (904) und eines Fahrzeugtachometers (902);
Bewirken (5306), dass das Fahrzeug (102) dem vorbestimmten Pfad basierend auf dem Ort folgt; und
Bewirken (4150), dass das Fahrzeug (102) Hindernisse detektiert und vermeidet, während es dem vorbestimmten Pfad folgt, **gekennzeichnet dadurch, dass**:

der Ort durch Erzeugen eines Ortes mit einem gewichteten Kombinierer bestimmt wird basierend auf einer Positionsschätzung vom terrestrischen Positionsbestimmungssystem (200-206, 624) und einer Positionsschätzung von der Initial-Bezugseinheit (904).

**14.** Verfahren gemäß Anspruch 13, wobei der Ortbestimmungsschritt folgende Schritte aufweist:

Ableiten einer ersten Positionsschätzung (716) des Fahrzeugs (102) basierend auf ersten Signalen (110) vom terrestrischen Positonsbestimmungssystem (200-206, 624);
Ableiten einer zweiten Positionsschätzung (908, 910) des Fahrzeugs (102) basierend auf zweiten Signalen (908, 910) erhalten von der Initial-Bezugseinheit (904), die am Fahrzeug (102) montiert ist und vom Fahrzeugtachometer (902);
Ableiten des Ortes des Fahrzeugs (102) aus der ersten Positionsschätzung (716) und der zweiten Positionsschätzung (908, 910).

**15.** Verfahren gemäß Anspruch 13, wobei der Ortbestimmungsschritt folgende Schritte aufweist:

Empfangen von Signalen vom terrestrischen Positionsbestimmungssystem (200-206, 624) an einer Referenzposition;
Verarbeiten der Signale an der Referenzposition zum Bestimmen eines Differential-Bias bzw. Differential-Vorwertes;
Kommunizieren des Differential-Bias von der Referenzposition zum Fahrzeug; und
Verarbeiten des Differential-Bias am Fahrzeug, um genau den Ort zu bestimmen.

**16.** Verfahren gemäß Anspruch 13, wobei der Ortbestimmungsschritt die folgenden Schritte aufweist:

Vorwegnehmen bzw. Vorhersagen (1304, 1306) der Relativposition von Satelliten (200-206) des terrestrischen Positionsbestimmungssystems in Bezug auf den Ort basierend auf Daten in einem Almanach;
Auswählen (1312) einer besten Konstellation der Satelliten (200-206) basierend auf der Geometrie der Satelliten (200-206) relativ zum Ort; und
Erkennen bzw. Anerkennen (1314) von nur Signalen von der besten Konstellation.

**17.** Verfahren gemäß Anspruch 14, wobei der erste Positionsschätzungs-Ableitungsschritt die folgenden Schritte aufweist:

Einbauen bzw. Einbeziehen (1906) von vorhergehenden ersten Positionsschätzungen in einen Best-Fit-Algorithmus bzw. Best-Anpassungs-Algorithmus;
Überwachen (1908) des Best-Fit-Algorithmus, bis der statistische R-quadrierte Wert des Best-Fit-Algorithmus größer ist oder gleich zu einem vorgewählten Schwellenwert 0,98; und
Extrapolieren (1916) der ersten Positionsschätzung aus dem Best-Fit-Algorithmus.

**18.** Verfahren gemäß Anspruch 14, wobei der erste Positionsschätzungs-Ableitungsschritt die folgenden Schritte aufweist:

Ableiten (2104) von Ist-Pseudobereichen der Satelliten (200-206) des terrestrischen Positionsbestimmungssystem unter Nutzung von Almanachdaten;
Berechnen (2104) von geschätzten Pseudobereichen der Satelliten (200-206) unter Nutzung von Ephemeriden-Daten;
Vergleichen (2106) der Unterschiede zwischen den Ist-Pseudobereichen und den geschätzten Pseudobereichen gegen einen vorausgewählten Schwellenwert;
Anwenden bzw. Verwenden (218) der geschätzten Pseudobereiche, wenn die Unterschiede größer sind als der vorausgewählte Schwellenwert; ansonsten Verwenden (2110) der Ist-Pseudobereiche; und
Nutzen der verwendeten Pseudobereiche für das Berechnen der ersten Positionsschätzung.

**19.** Verfahren gemäß Anspruch 14, das weiter die folgenden Schritte aufweist:

Übertragen der zweiten Signale (908, 910) (1010) zu einem zweiten Kalman-Filter (1202);
Ausgeben der zweiten Positionsschätzung aus dem zweiten Kalman-Filter (1202) an den gewichteten Kombinierer (1204);
Ausgeben aus dem gewichteten Kombinierer (1204) von einer Fahrzeuggeschwindigkeit (1018) des Fahrzeugs (102) an einen ersten Kalman-Filter (802) des ersten Positioniersystems; und
Anpassen des ersten Kalman-Filters (802) gemäß bzw. folgend der Fahrzeuggeschwindigkeit (1018) zum Erhöhen der Genauigkeit der ersten Positonsschätzung (1006), die vom ersten Kalman-Filter (802) ausgegeben wird.

**20.** Verfahren gemäß Anspruch 19, wobei der Schritt der Ausgabe aus dem gewichteten Kombinierer weiter den Schritt der Ausgabe von gewichteten Daten (1206) an den zweiten Kalman-Filter (1202) aufweist zum Erhöhen der Genauigkeit der zweiten Positionsschätzung.

**21.** Verfahren gemäß Anspruch 19, wobei der Schritt der Ausgabe vom gewichteten Kombinierer weiter den Schritt der Ausgabe von gewichteten Daten (1016) an einen Fahrzeugnavigator (406, 1022) aufweist.

**22.** Verfahren gemäß Anspruch 15, wobei der Signalverarbeitungsschritt die folgenden Schritte aufweist:

Erhalten (1706) der bekannten Position der Referenzposition (316);
Berechnen(1706) von Referenzantennen-Pseudobereichen ($R_3$, $R_2$, $R_4$, $R_6$) von Quellen (200-206, 624) des terrestrischen Positonsbestimmungssystems im Hinblick auf die Referenzposition (316);
Ableiten (1708) einer geschätzten Position der Referenzposition (316) unter Nutzung der Referenzantennen-Pseudobereiche ($R_0$, $R_2$, $R_4$, $R_6$); und
Vergleichen (1710) der geschätzten Position mit der exakten Position zum Ableiten des Differential -Bias.

**23.** Verfahren gemäß Anspruch 15, wobei der Signalverarbeitungsschritt die folgenden Schritte aufweist:

Berechnen von Ist-Pseudobereichen ($R_3$, $R_2$, $R_4$, $R_6$) für Quellen (200-206, 624) des terrestrischen Positionsbestimmungssystems im Hinblick auf eine Referenzantenne (316) bei einer Referenzposition, bis zu einer Zeit, zu der ein parabolisches Modell aufgebaut werden kann basierend auf den Ist-Pseudobereichen ($R_0$, $R_2$, $R_4$, $R_6$) mit einem vorausgewählten statistischen $R_2$-Wert;
Extrapolieren von geschätzten Pseudobereichen ($R_0$, $R_2$, $R_4$, $R_6$) der Quellen (200-206, 624) zu zukünftigen Zeiten aus den parabolischen Modellen; und
Berechnen von Differential-Biasen bzw. Differential-Vorwerten durch Vergleichen der Ist-Pseudobereiche ($R_0$, $R_2$, $R_4$, $R_6$) und der geschätzten Pseudobereiche ($R_3$, $R_2$, $R_4$, $R_6$).

**Revendications**

**1.** Système informatique pour faire naviguer de façon autonome un véhicule (102) le long d'une trajectoire prédéterminée, le système comprenant :

un premier moyen (1000) pour déterminer l'emplacement du véhicule (102), le premier moyen comprenant :

un premier système de positionnement (700) adapté à fournir une première estimation de position (716) du véhicule (102) sur la base de premiers signaux (110) à partir d'un système de détermination de position terrestre (200-206, 624) ;

un second système de positionnement (900) adapté à fournir une deuxième estimation de position (908, 910) du véhicule (102) sur la base de seconds signaux (908, 910) obtenus à partir d'un module de référence inertiel (904) monté sur le véhicule (102) et d'un compteur (902) du véhicule ; et

un système de traitement (1002, 1004, 1020) adapté à calculer une troisième estimation de position du véhicule (102) à partir de la première estimation de position (716) et de la deuxième estimation de position (908, 910) ; et

un second moyen (5306) pour amener le véhicule (102) à suivre la trajectoire prédéterminée,

**caractérisé en ce que** le système comprend en outre :

un troisième moyen (4150) pour amener le véhicule (102) à détecter et éviter des obstacles tout en suivant la trajectoire prédéterminée ; et **en ce que** :

le système de traitement comprend un dispositif de combinaison pondérée qui est utilisé pour le calcul de la troisième estimation de position du véhicule.

2. Système selon la revendication 1, dans lequel le système de détermination de position terrestre (200-206, 624) comprend au moins une source pour émettre les premiers signaux (110), ladite au moins une source étant constituée d'au moins un parmi un ou plusieurs pseudolites (624), un système de positionnement global (200-206) comprenant au moins un satellite en orbite (200-206), et le système de positionnement global (200-206) et ledit un ou plusieurs pseudolites (624).

3. Système selon la revendication 1, dans lequel le système de traitement (1002, 1004, 1020) comprend :

un processeur d'entrée/sortie I/O (1002) couplé au premier système de positionnement (700) et au deuxième système de positionnement (900), le processeur I/O (1002) étant adapté à recevoir la première estimation de position (716) et la deuxième estimation de position (908, 910), respectivement ;

un processeur principal (1004) couplé au processeur I/O (1002), le processeur (1004) destiné à calculer la troisième estimation de position à partir de la première estimation de position (716) et de la deuxième estimation de position (908, 910) comprenant un logiciel comprenant un second filtre de Kalman (1202) pour filtrer des données à partir du module de référence inertiel (904) ; et

un processeur d'interface de communication (1020) couplé au processeur principal (1004), le processeur d'interface de communication (1020) étant destiné à fournir la troisième estimation de position.

4. Système selon la revendication 2, dans lequel le premier système de positionnement (700) comprend en outre un récepteur de référence (316) à un emplacement connu situé près du véhicule (102), le récepteur de référence (316) étant destiné à recevoir les premiers signaux (110) à partir du système de détermination terrestre (200-206, 624) et du récepteur de référence (316) pour calculer un décalage différentiel.

5. Système selon la revendication 2, dans lequel le premier système de positionnement (700) comprend :

une antenne (702) pour recevoir les premiers signaux (110) ;

un préamplificateur (704) couplé à l'antenne (702), le préamplificateur (704) étant destiné à amplifier les premiers signaux (110) ;

un premier récepteur (706) couplé au préamplificateur, le premier récepteur (706) étant destiné à suivre les sources (200-206, 624) couramment observées et à fournir des pseudodistances réelles ($R_0$, $R_2$, $R_4$, $R_6$) des sources (200-206, 624) ;

un processeur d'intercommunication (708) couplé au premier récepteur (706), le processeur d'intercommunication (708) étant destiné à recevoir les pseudodistances réelles à partir du premier récepteur (706) et à fournir les pseudodistances réelles et les informations d'état ; et

un processeur GPS (710) couplé au processeur d'intercommunication (708), le processeur GPS (710) étant destiné à calculer la première estimation de position (716) à partir des pseudodistances réelles.

6. Système selon la revendication 4, dans lequel le décalage différentiel comprend un décalage initial calculé en soustrayant les pseudodistances estimées ($R_0$, $R_2$, $R_4$, $R_6$) et les décalages d'horloge de base des pseudodistan-

ces réelles ($R_0$, $R_2$, $R_4$, $R_6$).

7.  Système selon la revendication 4, dans lequel le décalage différentiel comprend un décalage parabolique calculé en utilisant un modèle parabolique constitué sur une période de temps à partir des pseudodistances réelles antérieures.

8.  Système selon la revendication 4, dans lequel le décalage différentiel est calculé en dérivant une différence entre un emplacement estimé du récepteur de référence (316) et l'emplacement connu du récepteur de référence (316), l'emplacement estimé étant obtenu à partir d'une constellation des sources (200-206, 624), la constellation étant utilisée par le premier système de positionnement (700) du véhicule (102) pour fournir la première estimation de position (716) du véhicule (102).

9.  Système selon la revendication 5, dans lequel le processeur GPS (710) comprend un premier filtre de Kalman (802) pour filtrer les premier signaux (110).

10. Système selon la revendication 3, dans lequel le dispositif de combinaison pondéré (1204) est couplé à la sortie du second filtre de Kalman (802).

11. Système selon la revendication 9, dans lequel le premier filtre de Kalman (802) modifie ses perturbations de données acceptables en fonction de la vitesse du véhicule (102).

12. Système selon la revendication 9, dans lequel le système de traitement (1002, 1004, 1020) adapté à calculer la troisième estimation de position de façon continue communique les données de vitesse du véhicule (1018) au premier filtre de Kalman (802) du premier système de positionnement (700), le premier filtre de Kalman (802) utilisant les données de vitesse du véhicule pour augmenter ainsi la précision de la première estimation de position (716) du premier système de positionnement (700).

13. Procédé informatique pour faire naviguer de façon autonome un véhicule (102) le long d'une trajectoire prédéterminée, ce procédé comprenant les étapes suivantes :

    déterminer l'emplacement du véhicule (102) en utilisant un système de détermination de position terrestre (200-206, 624), un module inertiel de référence (904) et un compteur du véhicule (902) ;
    amener (5306) le véhicule (102) à suivre la trajectoire prédéterminée sur la base dudit emplacement ; et
    amener (4150) le véhicule (102) à détecter et éviter des obstacles tout en suivant la trajectoire prédéterminée,

    **caractérisé en ce que** :

    l'emplacement est déterminé en produisant, par un dispositif de combinaison pondéré, un emplacement sur la base d'une estimation de position en provenance du système de détermination de position terrestre (200-206, 624) et une estimation de position en provenance du module inertiel de référence (904).

14. Procédé selon la revendication 13, dans lequel l'étape de détermination de l'emplacement comprend les étapes suivantes :

    fournir une première estimation de position (716) du véhicule (102) sur la base de premiers signaux (110) en provenance du système de détermination de position terrestre (200-206, 624) ;
    fournir une deuxième estimation de position (908, 910) du véhicule (102) sur la base de deuxièmes signaux (908, 910) obtenus à partir du module inertiel de référence (904) monté sur le véhicule (102) et du compteur du véhicule (902) ; et
    fournir l'emplacement du véhicule (102) à partir de la première estimation de position (716) et de la deuxième estimation de position (908, 910).

15. Procédé selon la revendication 13, dans lequel l'étape de détermination de l'emplacement comprend les étapes suivantes :

    recevoir des signaux à partir du système de détermination de position terrestre (200-206, 624) à une position de référence ;
    traiter les signaux à la position de référence pour déterminer le décalage différentiel ;

communiquer au véhicule le décalage différentiel par rapport à la position de référence ; et

traiter le décalage différentiel au niveau du véhicule pour déterminer avec précision son emplacement.

**16.** Procédé selon la revendication 13, dans lequel l'étape de détermination de l'emplacement comprend les étapes suivantes :

anticiper (1304, 1306) la position relative des satellites (200-206) du système de détermination de position terrestre par rapport à l'emplacement sur la base de données dans un almanach ;

sélectionner (1312) une meilleure constellation des satellites (200-206) sur la base de la configuration des satellites (200-206) par rapport audit emplacement ; et

reconnaître (1314) seulement les signaux en provenance de la meilleure constellation.

**17.** Procédé selon la revendication 14, dans lequel l'étape de fourniture de la première estimation de position comprend les étapes suivantes :

incorporer (1906) les précédentes premières estimations de position dans un algorithme de meilleur accord ;

surveiller (1908) l'algorithme de meilleur accord jusqu'à ce que la valeur carrée statistique R de l'algorithme de meilleur accord soit supérieure ou égale à un seuil prédéterminé 0,98 ; et

extrapoler (1916) la première estimation de position à partir de l'algorithme de meilleur accord.

**18.** Procédé selon la revendication 14, dans lequel l'étape de fourniture de la première estimation de position comprend les étapes suivantes :

fournir (2104) des pseudodistances réelles des satellites (200-206) du système de détermination de position terrestre en utilisant des données d'almanach ;

calculer (2104) des pseudodistances estimées des satellites (200-206) en utilisant des données d'éphémérides ;

comparer (2106) des différences entre les pseudodistances réelles et les pseudodistances estimées à un seuil prédéterminé ;

adopter (2108) les pseudodistances estimées si les différences sont supérieures au seuil prédéterminé ; sinon adopter (2110) les pseudodistances réelles ; et

utiliser les pseudodistances adoptées pour calculer la première estimation de position.

**19.** Procédé selon la revendication 14, comprenant en outre les étapes suivantes :

transmettre les deuxièmes signaux (908, 910 ; 1010) à un second filtre de Kalman (1202) ;

fournir la deuxième estimation de position à partir du second filtre de Kalman (1202) au dispositif de combinaison pondéré (1204) ;

fournir à partir du dispositif de combinaison pondéré (1204) une vitesse (1018) du véhicule (102) à un premier filtre de Kalman (802) du premier système de positionnement ; et

adapter le premier filtre de Kalman (802) suivant la vitesse du véhicule (1018) pour augmenter la précision de la première estimation de position (1006) fournie par le premier filtre de Kalman (802).

**20.** Procédé selon la revendication 19, dans lequel l'étape de sortie du dispositif de combinaison pondéré comprend en outre l'étape de fourniture de données pondérées (1206) au second filtre de Kalman (1202) pour augmenter la précision de la deuxième estimation de position.

**21.** Procédé selon la revendication 19, dans lequel l'étape de sortie du dispositif de combinaison pondéré comprend en outre l'étape de fourniture de données pondérées (1016) à un navigateur du véhicule (406, 1022).

**22.** Procédé selon la revendication 15, dans lequel l'étape de traitement de signal comprend les étapes suivantes :

fournir (1706) la position connue de la position de référence (316) ;

calculer (1706) des pseudodistances d'antenne de référence ($R_3$, $R_2$, $R_4$, $R_6$) pour des sources (200-206, 624) du système de détermination de position terrestre en vue de la position de référence (316) ;

fournir (1708) une position estimée de la position de référence (316) en utilisant les pseudodistances d'antenne de référence ($R_0$, $R_2$, $R_4$, $R_6$); et

comparer (1710) la position estimée à la position exacte pour fournir le décalage différentiel.

**23.** Procédé selon la revendication 15, dans lequel l'étape de traitement de signal comprend les étapes suivantes :

calculer des pseudodistances réelles ($R_3$, $R_2$, $R_4$, $R_6$) pour les sources (200-206, 624) du système de détermination de position terrestre en vue d'une antenne de référence (316) à la position de référence jusqu'à un moment auquel un modèle parabolique peut être construit sur la base des pseudodistances réelles ($R_0$, $R_2$, $R_4$, $R_6$) avec une valeur statistique prédéterminée ($R_2$) ;

extrapoler des pseudodistances estimées ($R_0$, $R_2$, $R_4$, $R_6$) des sources (200-206, 624) à des instants futurs à partir des modèles paraboliques ; et

calculer des décalages différentiels en comparant les pseudodistances réelles ($R_0$, $R_2$, $R_4$, $R_6$) et les pseudodistances estimées ($R_3$, $R_2$, $R_4$, $R_6$).

105

PSEUDOLITE(S)    GPS SATELLITES

104

192    107    110

VEHICLE

VEHICLE POSITIONING SYSTEM (VPS)

MOTION POSITIONING SYSTEM (MPS)

VEHICLE
ODOMETER    902

904    INERTIAL
REFERENCE
UNIT (IRU)

GPS
PROCESSING
SYSTEM

700

MPS INTER
COMMUNICATIONS
PROCESSOR

GYROS    106

108

906    ACCELEROMETERS

190    900

112    114

194    VPS
PROCESSING
SYSTEM    116

1000

118

HOST
PROCESSING
SYSTEM

NAVIGATION
SYSTEM

186    196    1022

BASE STATION    188

102

100

FIG 1

100A

FIG 1A

202 $(X_2, Y_2, Z_2)$

204

208 Time is...
My Position is...

$(X_4, Y_4, Z_4)$

200 $(X_0, Y_0, Z_0)$

206

$(X_6, Y_6, Z_6)$

Ro

Uz

Vehicle 102
$(U_x, U_y, U_z)$

$\overline{U}$

$\theta$

Uy

$\beta$

Ux

Greenwich Prime Meridian

Equator

172

X

EARTH

FIG 2

$$(X_0 - U_x)^2 + (Y_0 - U_y)^2 + (Z_0 - U_z)^2 = (R_0 - C_0)^2$$

$$(X_2 - U_x)^2 + (Y_2 - U_y)^2 + (Z_2 - U_z)^2 = (R_2 - C_0)^2$$

$$(X_4 - U_x)^2 + (Y_4 - U_y)^2 + (Z_4 - U_z)^2 = (R_4 - C_0)^2$$

$$(X_6 - U_x)^2 + (Y_6 - U_y)^2 + (Z_6 - U_z)^2 = (R_6 - C_0)^2$$

$$\text{Vehicle 102 Latitude} = \theta = COS^{-1} \sqrt{\frac{(U_x^2 + U_y^2)}{|\overline{u}|}}$$

$$\text{Vehicle 102 Longitude} = \beta = TAN^{-1} \ U_x/U_y$$

212

EP 0 936 517 B1

# FIG 3

## Autonomous Work Site

300

FIG. 4

FIG 5

FIG 6

GPS Antenna

702

Pre Amp 704

700

GPS Receiver 706

GPS Inter Communications Processor 708

GPS Console 1 712

GPS Processor 710

GPS Console 2 722

716

GPS Communications Interface Processor 720

Data Radio 714

GPS Data Collection Device 718

FIG 7

714 — Data Radio

GPS Receiver

706

800

720 — GPS Communications Interface Processor

GPS Data Collection Device

718

IPROTO Function

804

ICC Function

812

Communications Manager Function

808

Raw GPS Data Output Function

814

Request & Decode GPS Data

806

708

Decode Radio Link Data

810

Control File (Priori)

820

GPS Kalman Filter

802

710

Console Function

816

VPS Communications Function

818

FIG 8

GPS Console 2

722

VPS System

1000

900

Odometer — 902
IRU — 904

MPS Inter
Communications
Processor
906

908
910

Odometer
Signal

IRU
Signal

To Vps
Main Processor
1002

Fig 9

GPS
Processing
System
700

MPS
Processing
System
900

1018

716

908

910

Velocity
Data and
Position
Data

VPS Main
Processor
1002

1008

VPS I/O
Processor
1004

1016

1000

VPS
Communications
Interface Processor
1020

To Navigation
Sytem 1022

VPS Data
Collector
1014

VPS
Console
1012

FIG 10

FIG. 11

GPS
Signal

Odometer
Signal

IRU
Signal

716 —

908 —

910 —

VPS
Kalman
Filter

1202

1210

1204

1018

Weighted Combiner

1206

1208

1002

1008

1200

FIG. 12

To Vps
I/O Processor
1004

54

FIG. 12A

Constellation effects, START — 1302

1300

↓

Determine estimated pseudoranges for each Satellite in view of GPS Antenna 702 — 1304

1314

↓

Map the estimated pseudoranges into a polar map with the estimated vehicle position in the center — 1306

↓

Determine expected ellipsoidal error shape by drawing circles from each Satellite to the estimated vehicle position — 1308

↓

Modify filter parameters at the vehicle to accommodate the shape of the estimated ellipsoid and the computed northing - easting coordinates of the vehicle. — 1315 / 1312

↓

Determine optimal satellite configuration for the desired path (i.e., the configuration that gives the least error perpendicular to the desired vehicle path). — 1316

↓

Send optimal Satellite constellation info to the vehicle. — 1318

↓

FIG 13

END — 1320

FIG 14

1400

START — 1502

1500

Determine Actual Pseudoranges, Estimated Pseudoranges, and Clock Bias for each GPS satellite — 1504

Derive Spatial (original) Bias by Subtracting Estimated Pseudoranges and Clock Bias from Actual Pseudorange — 1508

1512

Update Base Station GPS Kalman Filter — 1510

Transmit Original Biases to Vehicle Using Data Radio — 1514

FIG 15

END — 1516

**FIG 16**

Flowchart:

START — 1602

At Time T(n) Determine Actual Pseudoranges — 1604

Incorporate Actual Pseudoranges Into Parabolic Best Fit Models — 1606

1600

Enough Data Collected? ($R^2 > 0.98$) — 1608
- No → n increments — 1610 (loops back to 1604)
- Yes →

Parabolic Models Represent Points On Past and Expected Future Satellite Paths — 1612

Derive Locus Point at Time T(n+1) On Parabolic Model — 1614

Compute Ranges For Each Locus Point — 1616

Determine Pseudorange For Time T(n + 1) — 1618

Subtract T(n +1) Actaul Pseudoranges and Base Clock Biases From Locus Point Ranges to Get Parabolic Biases — 1620

Output Parabolic Biases to Vehicle — 1624

END — 1626

<u>1700</u>

START ⌐ 1702

Obtain the Exact X0, Y0, Z0 Coordinate
of the Base Known Position (BKP) ⌐ 1704

Compute Base Actual Pseudoranges, Base Estimated
Pseudoranges, and Base Clock Biases ⌐ 1706

Compute Base Position Estimate
of the Base Position ⌐ 1708

Compare Base Position Estimate with Known Base
Position to derive Spatial Bias Called Base Residuals Bias ⌐ 1710

Use the Base Residuals Bias as a
Spatial Bias for the Vehicle. ⌐ 1712

FIG 17        END ⌐ 1714

START 1701

1703

1705

COMPUTE AT BASE
STATION 188:
1. BASE ACTUAL PSEUDORANGES
2. BASE ESTIMATED PSEUDORANGES
3. BASE CLOCK BIASES
4. BASE SPATIAL BIASES

1707

1709

TRANSMIT TO VEHICLE 102 FROM
BASE STATION 188:
1. BASE ACTUAL PSEUDORANGES
2. BASE ESTIMATED PSEUDORANGES
3. BASE CLOCK BIASES
4. BASE SPATIAL BIASES
5. BASE KNOWN POSITION (BKP)

1711

1713

INCORPORATE BASE SPATIAL
BIASES IN COMPUTATION OF
VEHICLE SPATIAL BIASES AT
VEHICLE 102

1715

1717

COMPUTE FPE(I), WHERE
I=0, USING VEHICLE
SPATIAL BIASES

1700A

1719

i=i+1

1721

COMPUTE HBE AT
VEHICLE 102:
HBE= FPE(i)-BKP

1723

1725

COMPUTE HBA AT
VEHICLE 102:
HBA= FPE(i)-BKP

1727

1729

COMPUTE OFFSET
AT VEHICLE 102:
OFFSET= HBA-HBE

1731

1733

COMPUTE NEW FPR
AT VEHICLE 102:
FPE(I)=FPE(I)-OFFSET

1735

1739

AT
VEHICLE 102:
OFFSET < THRESHOLD
?

NO

1737

YES

1741

1747

1745

END

AT VEHICLE 102:
FPE=FPE(I)

1743

Fig 17A

**Start** 1802

1800

Acquire Date and Time of
Desired Satellite Position 1804

Determine Absolute Position
of Base Station or Vehicle; Use Absolute
Position as a Reference Point 1806

Use Almanac Data Equations to Determine
Satellite Position in X,Y,Z Coordinates 1808

Compute Latitude, Longitude, Elevation and
Azimuth From X, Y, Z Coordinates 1810

**END** 1812

FIG 18

1900

Start 1902

Compute First Position Using the GPS Processing System 1904

End 1918

Output First Position Estimate 1912

Derive a Path Equation that Best Fits the Path of the Vehicle 102 1906

No

1908

Is the R^2 Value ≥ Threshold ?

No

1910

Is Number of First Position Estimates > Threshold ?

Yes

Yes

Modify First Position Estimate to be the Best Fit Prediction From the Path Equation 1916

Start Derivation of New Path Equation 1914

FIG. 19

<u>2000</u>

2012

2008

Best Fit
Prediction

2006

2010

2016

2014

2004

2022

2002

20

START
2001
2003
2005

GPS PROCESSING SYSTEM 700 USES BIAS
TECHNIQUE(S) TO COMPUTE FPE OF VEHICLE 102

2007

1600A

2009

APPROACHING
OR IN MIDST OF
INTERSECTION, SHARP
CORNER, OR DRASTIC
NONLINEAR
PATH
?

NO

2013

2033

2021

YES

2015

GPS PROCESSING
SYSTEM 700
OUTPUTS FPE
TO VPS 1000

2023

TEMPORARILY ABANDON
BIAS TECHNIQUE(S) IN
COMPUTATION OF FPE

2017

END

2019

2025

GPS PROCESSING
SYSTEM 700
COMPUTES FPE
WITHOUT BIAS
TECHNIQUE(S)

2027

2035

2029

2031

YES

APPROACHING
OR IN MIDST OF
RELATIVELY LINEAR
PATH
?

NO

Fig 20A

2200

Segment5 = END OF ROUTE

2218

node6 2222

2210

node4

2212

node5

segment3
2214

2216

2220

segment2
2224

2208

2206

node2

Sequence 1 = segment5, node 1, segment1, node2, segment4, node6, segment5

Sequence 2 = segment5, node 1, segment1, node2, segment2, node4, segment3, node 5, segment5

Route 1 = sequence 1, start at node6, traverse in the positive direction

Route 2 = sequence 1, start at node6, traverse in the negative direction

segment1
2224

Route 3 = sequence 2, start at node1, traverse in the positive direction

**ROUTE DEFINITIONS**

FIG 21

2202

node1

EP 0 936 517 B1

Host 504
186
502
Navigator Interface
3602

3658
Navigator Status
3606
3608
3606
3604

Supervision
3662

3614 3612
3612
3614

Maxspeed
3632
3636
3638
3660

Safe Distance
3634

Vehicle Control
420
Virtual Vehicle
102
408
3616

Navigator Status
3608

Navigator Status
3646
3608
3646
Position Buffer
3640
3642
3648
3642

Path Buffer
3630
3660
3644

Position Estimation
434
434
3652

Host
186

3648
3648

Supervision
3646

3628
3626
3626
3624

Path Management
3618

Path Store
3622
3620

FIG 22

3600

3800A

Fig 23A

Total Vertical Field of View

Stopping Distance

Dist Trav. In 1 Scan Interval

23B

3800B